# EUROPEAN PATENT SPECIFICATION

(11) **EP 4 203 623 B1**
(45) Date of publication and mention of the grant of the patent: **14.10.2026**
(21) Application number: 21216530.2
(22) Date of filing: 21.12.2021
(51) Int. Cl.: H05B 47/19, H05B 47/105, G01S 5/02, H04L 41/084, H04L 41/12

(54) **LIGHTING CONTROL**
BELEUCHTUNGSSTEUERUNG
COMMANDE D'ÉCLAIRAGE

(43) Date of publication of application: 28.06.2023
(73) Proprietor: Helvar Oy Ab, 02150 Espoo (FI)
(72) Inventor: JUSLÉN, Henri, 02150 ESPOO (FI); TAKALA, Pasi, 02150 ESPOO (FI)
(74) Representative: Berggren Oy

(56) References cited:
- EP-A1- 3 681 251
- WO-A1-2021/074046
- US-A1- 2011 031 897
- US-A1- 2014 167 620
- US-A1- 2014 354 161

## Description

### TECHNICAL FIELD

The example and non-limiting embodiments of the present invention relate to controlling light output of luminaires of a lighting system applicable for illuminating a space based on sensor data obtained in the space.

### BACKGROUND

Many lighting systems applied for illuminating an indoor space and/or an outdoor space involve usage of luminaires that are able to autonomously control at least some aspects of their operation based on environmental characteristics determined via usage of one or more sensors provided in the space. Typical, but non-limiting, examples of sensors applicable for at least partially controlling the light output from luminaires of the lighting system include an occupancy sensor and a light sensor: while occupancy sensors may be applied to switch lights on in response to detecting occupancy in the illuminated space and two switch lights off in response to detecting non-occupancy in the illuminated space, light sensors may be applied to control the light output in view of the ambient light in the space such that a desired level of illumination is provided. Hence, occupancy sensors and light sensors enable at least partially autonomous lighting control that ensures user comfort while minimizing energy consumption.

In many scenarios a single occupancy sensor or a single light sensor may provide a sensor signal serving as basis for controlling respective light output of a plurality of luminaires of the lighting system, whereas luminaires that are controlled based on the sensor signal provided by the same sensor may be considered as a luminaire group. As examples in this regard, each luminaire of a luminaire group controlled by the sensor signal from a certain occupancy sensor may be switched or kept on in response to the sensor signal indicating occupancy and switched or kept off in response to the sensor signal indicating non-occupancy. Along similar lines, respective light output of each luminaire of a luminaire group controlled by the sensor signal from a certain light sensor may be adjusted in a similar manner in response to changes in observed light reported in the sensor signal.

Luminaire grouping may be useful, for example, to ensure sufficient lighting at and close to locations where occupancy is detected and/or to ensure substantially uniform lighting from multiple luminaires that are relatively close to each other in the same space (e.g. in the same room). In a traditional lighting system design any luminaire groups applied therein are manually configured into the devices upon installing, configuring or reconfiguring the lighting system. As an example in this regard, a control entity of the lighting system may be configured, e.g. programmed, with a mapping between sensors and corresponding luminaire groups, e.g. such that each of one or more sensors of the lighting system is mapped to a certain luminaire group. Consequently, sensor signals originating from a certain sensor are applied for controlling respective light output from each of the luminaires assigned to the respective manually configured luminaire group. However, especially in large lighting systems manual configuration of luminaire groups constitutes a significant effort while the manual configuration procedure is also prone to errors and hence advanced approaches in this regard are highly desirable.

In related art, US 2014/354161 A1 discloses networked intelligent lighting devices and other elements connected to the network of a lighting system that are readily adaptable to desirable networking arrangements as well as logical functional groups, for example by each storing communication provisioning data and/or configuration data for logically associating system elements into one or more groupings or sub-networks. The exemplary systems and system elements may also enable such enhanced network arrangement via autonomous discovery and device commissioning.

Further in related art, WO 2021/074046 A1 discloses proximity-based commissioning of a large number of nodes deployed in a dense network. In this regard, nodes to be commissioned are configured to spend most of its time on detecting beacons from a commissioning device to derive proximity information in a one-to-many topology. The node is further configured to feedback the proximity information to the commissioning device at an adaptive beacon rate to further assist the commissioning device to implement the proximity-based commissioning.

Further in related art, US 2011/031897 A1 discloses a lighting system for areal illumination, which includes a remote driver and a plurality of fixtures including luminaires, control devices, and/or standalone sensors. The luminaires include a light source whose output light level can be adjusted, a light sensor co-located therewith adapted to measure light received from adjacent fixtures, and a microcontroller capable of transmitting the output of the light sensor over wires to the remote driver. The remote driver is capable of bidirectional communication with the luminaires and provides independently controllable power for the light sources of the luminaires. A method of commissioning a lighting system is also disclosed which includes installing a plurality of luminaires above the area to be illuminated, causing a light source co-located with each luminaire to emit a signal, detecting the signal at light sensors co-located with each luminaire, converting the signals obtained by the light sensors into distance measurements between luminaires, creating a map recording the relative location of luminaires, and assigning luminaires to groups based on their relative locations in the map. A movable orb region large enough to containing a plurality of luminaires can also be defined and the light levels of individual luminaires can be set according to a defined mathematical function of their location within the orb region, where the defined mathematical function sets light levels which vary from the center to the periphery of said orb region.

Further in related art, US 2014/167620 A1 discloses a lighting network where control of lighting fixtures in the lighting network may be distributed among the lighting fixtures. The lighting fixtures may be broken into groups that are associated with different lighting zones. At least some of the lighting fixtures will have or be associated with one or more sensors. Within the overall lighting network or the various lighting zones, the lighting fixtures may share sensor data from the sensors. Each lighting fixture processes sensor data provided by its own sensor, a remote standalone sensor, or lighting fixture, and processes the sensor data according to the lighting fixture's internal logic to control operation of the lighting fixture. The lighting fixtures may also receive control input from other lighting fixtures, control nodes, light switches, and commissioning tools. The control input is processed along with the sensor data according to the internal logic to enhance control of the lighting fixture.

### SUMMARY

It is an object of the present invention to provide an approach for automated or semi-automated determination of luminaire groups for a lighting system.

According to an aspect of the invention a sensor unit for a lighting system that comprises a plurality of luminaires for illuminating respective locations of a space is provided, the sensor unit comprising: a sensor portion comprising one or more sensors for observing respective environmental characteristics at a location of the space; a communication portion for wireless communication with other elements of the lighting system, where said other elements comprise the plurality of luminaires; and a control portion arranged to: obtain a luminaire grouping template that defines one or more grouping criteria for determining a luminaire group for the sensor unit, wherein the luminaire grouping template defines said one or more grouping criteria via indicating selection of the one or more grouping criteria from a plurality of predefined grouping criteria available for the sensor unit and wherein said one or more grouping criteria comprise at least one distance criterion and at least one group size criterion; derive a respective local distance measure for luminaires of a first subset of the plurality of luminaires based on one or more messages received therefrom at the communication portion, wherein each local distance measure is descriptive of a distance between the sensor unit and the respective luminaire; determine the luminaire group for the sensor unit via assigning thereto, in accordance with the at least one distance criterion and further in accordance with the at least one group size criterion, one or more luminaires of the first subset based on the local distance measure derived therefor; and control, based on sensor data received from the sensor portion, respective light outputs of the luminaires assigned to said luminaire group for the sensor unit.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described in the following examples may be used in combinations other than those explicitly described, unless explicitly stated otherwise.

### BRIEF DESCRIPTION OF FIGURES

The embodiments of the invention are illustrated by way of example, and not by way of limitation, in the figures of the accompanying drawings, where
Figure 1 illustrates a block diagram of some logical components of a lighting system according to an example;
Figure 2 illustrates a block diagram of some components of a luminaire according to an example;
Figure 3 illustrates a block diagram of some components of a sensor unit according to an example;
Figure 4 illustrates a method according to an example;
Figure 5 illustrates a floorplan of an illuminated space including spaces of different types; and
Figure 6 illustrates a block diagram of some components of an apparatus according to an example.

### DESCRIPTION OF SOME EMBODIMENTS

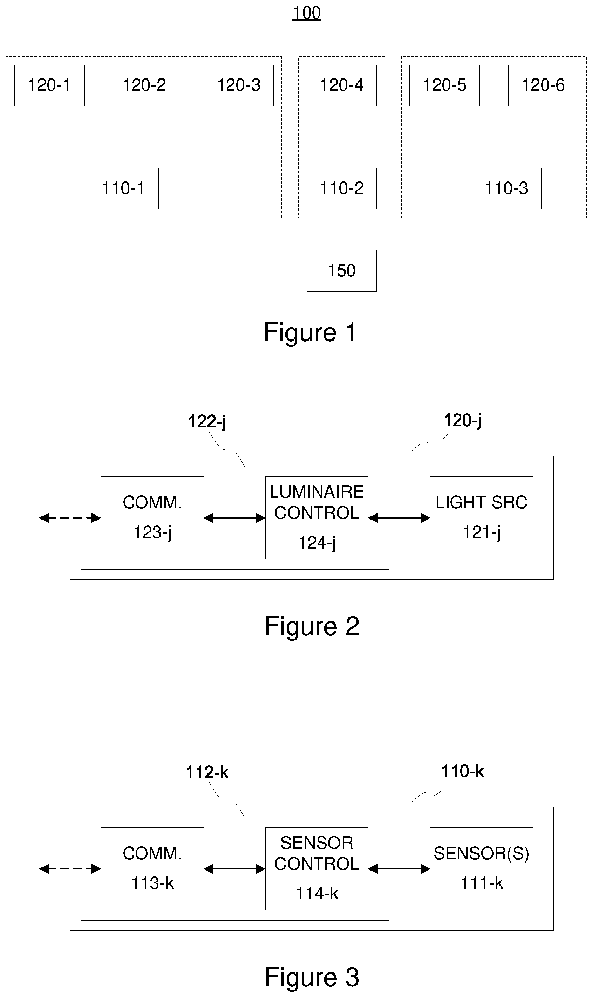

Figure 1 illustrates a block diagram of some components of a lighting system 100 according to an example. The lighting system 100 may be arranged for illuminating a space or area, which may comprise e.g. one or more indoor spaces or areas and/or one or more outdoor spaces or areas. In the following, for brevity of description, the space or area that the lighting system 100 serves to illuminate is referred to as an illuminated space.

In the example of Figure 1 the lighting system 100 is shown with sensor units 110-1, 110-2 and 110-3 and with luminaires 120-1 to 120-6. Therein, the luminaires 120-1 to 120-6 are arranged into three luminaire groups, each luminaire group controlled via operation of respective one of the sensor units 110-1 to 110-3: luminaires 120-1, 120-2 and 120-3 belong to a first luminaire group controlled via operation of the sensor unit 110-1, luminaire 120-4 belongs to a second luminaire group controlled by the sensor unit 110-2, and luminaires 120-5 and 120-6 belong to a third luminaire group controlled via operation of the sensor unit 110-3.

The sensor units 110-1, 110-2 and 110-3 represent a plurality of sensor units 110, where any individual sensor unit may be referred to via a reference number 110-k. Along similar lines, the luminaires 120-1 to 120-6 represent a plurality of luminaires 120, whereas any individual luminaire may be referred to via a reference number 120-j. The plurality of luminaires 120 are arranged for illuminating respective locations of the illuminated space, whereas the plurality of sensor units 110 are arranged for observing one or more environmental characteristics at their respective locations of the illuminated space. In this regard, it is worth noting that the example of Figure 1 serves to illustrate the sensor units 110-k and the luminaires 120-j as respective elements of the lighting system 100 and to illustrate the arrangement of the plurality of luminaires 120 into two or more luminaire groups, where respective luminaires 120-j of each luminaire group are controlled via operation of a respective one of the plurality of sensor units 110, while on the other hand the illustration of Figure 1 does not serve to illustrate any physical characteristics of the sensor units 110-k and/or the luminaires 120-j and/or spatial relationship between the plurality of luminaires 120 and the plurality of sensor units 110.

Each of the plurality of sensor units 110 and each the plurality of luminaires 120 may be considered as a respective element of the lighting system 100, whereas the elements of the lighting system 100 may be communicatively coupled to each other via respective wireless communication links or via a wireless communication network provided using a suitable wireless communication technique known in the art. Due to the communicative couplings to other elements of the lighting system 100, each element of the lighting system 100 may be considered as a node of a lighting network formed by the elements of the lighting system 100.

The example of Figure 1 further illustrates a server 150 that may be optionally included in the lighting system 100. The server 150 may be also referred to as a lighting control server. The plurality of sensor units 110 may be communicatively coupled to the server 150 via respective wireless communication links or via a wireless communication network provided using a suitable wireless communication technique known in the art. In this regard, the server 150 may store lighting control information applicable by the plurality of sensor units 110 and/or the server 150 may carry out one or more procedures that pertain to lighting control in the lighting system 100 on behalf of or in collaboration with one or more of the plurality of sensor units 110.

Along the lines described above, the plurality of luminaires 120 are arranged into a plurality of luminaire groups, where the respective light output from those ones of the plurality of luminaires 120 that are assigned to a certain luminaire group may be at least in part controlled via operation of a sensor unit 110-k assigned for the respective luminaire group. Hence, luminaires 120-j of a certain luminaire group may be referred to as luminaires 120-j assigned to and/or associated with the sensor unit 110-k of the respective luminaire group and, vice versa, the sensor unit 110-k of a certain luminaire group may be referred to as a sensor unit 110-k assigned to and/or associated with the luminaires 120-j of the respective luminaire group. Each luminaire group may have a respective luminaire group identifier (ID) assigned thereto. The luminaire group ID of a luminaire group may comprise a name, a number or an identification of other kind that uniquely identifies the respective luminaire group in the framework of the lighting system 100 and the luminaire group ID may be applied, for example, to identify the respective luminaire group in communication between elements of the lighting system 100, e.g. when addressing the luminaires 120-j and/or the sensor unit 110-k of the respective luminaire group.

Each sensor unit 110-k comprises respective one or more sensors arranged for observing respective environmental characteristics at its location in the illuminated space. Moreover, the luminaires 120-j associated with a certain sensor unit 110-k (e.g. the subset of the plurality of luminaires 120 assigned to the same luminaire group with the sensor unit 110-k) include ones that are located in or close to a sensing area of the one or more sensors of the respective sensor unit 110-k, the one or more sensors of the respective sensor unit 110-k thereby serving to observe environmental characteristic at or close to a portion of the space illuminated by those ones of the luminaires 120-j that are associated with the respective sensor unit 110-k. Hence, the sensor unit 110-k may be considered as an area sensor that serves to control the respective light output of one or more luminaires 120-j that are available for illuminating the area.

In the following, various aspects that pertain to arranging a subset of the plurality of luminaires 120 into a luminaire group assigned to and/or associated with a certain sensor unit 110-k and to the respective sensor unit 110-k controlling some aspects of the respective light output of the luminaires 120-j of this luminaire group are described via non-limiting examples.

Figure 2 illustrates a block diagram of some (logical) components of a luminaire 120-j according to an example. The luminaire 120-j may comprise at least one light source 121-j and a luminaire control apparatus 122-j that comprises a communication portion 123-j for wireless communication with other elements of the lighting system 100 and a control portion 124-j for controlling at least one aspect of operation of the luminaire 120-j in accordance with lighting control information or lighting control commands received via the communication portion 123-j from the sensor unit 110-k assigned to the luminaire 120-j.

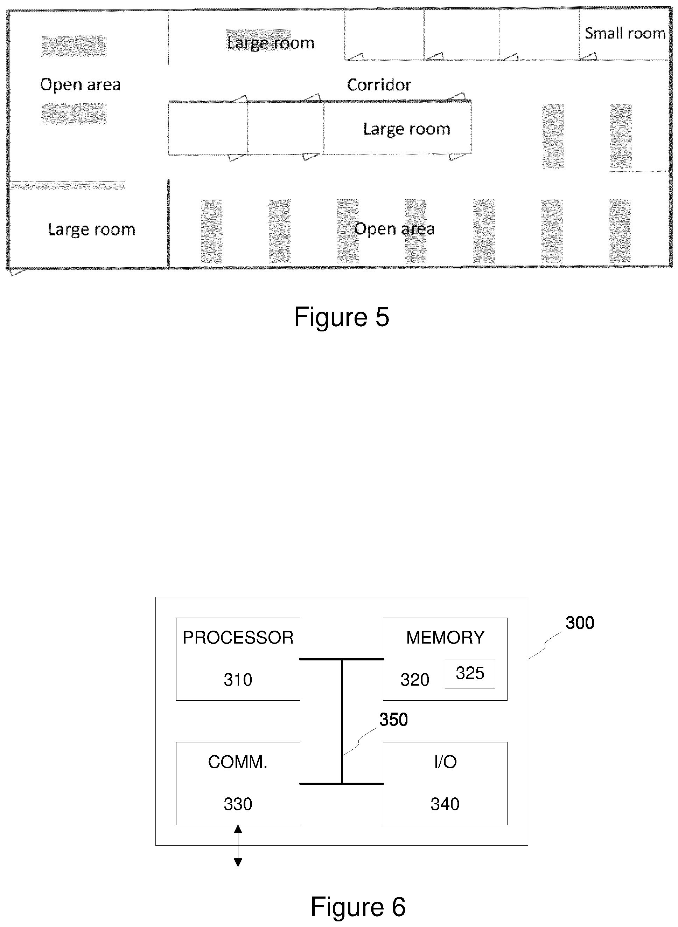

According to an example, the at least one light source 121-j may comprise one or more light emitting diodes (LEDs) and the luminaire control apparatus 122-j may comprise or it may be provided as a LED driver device, whereas in another non-limiting example the at least one light source 121-j may comprise one or more fluorescent lamps and the luminaire control apparatus 122-j may comprise or it may be provided as an electronic ballast. The control portion 124-j may control one or more aspects of light output of the at least one light source 121-j in accordance with the lighting control information or lighting control commands received via the communication portion 123-j from the sensor unit 110-k assigned to the luminaire 120-j. In an example, the control portion 124-j may comprise a processor and a memory, where the memory is arranged to store computer program code that, when executed by the processor, causes the luminaire control apparatus 122-j to operate the luminaire 120-j in accordance with the lighting control information or lighting control commands received thereat. More detailed examples of using the processor and the memory for implementing the control portion 124-j are described later in this text with references to Figure 6.

The luminaire 120-j or an element thereof may have a device ID, e.g. an address, a serial number, a name, etc. assigned to the luminaire 120-j or to an element thereof. The device ID assigned to the luminaire 120-j may be referred to as a luminaire ID of the luminaire 120-j. The luminaire ID may be stored, for example, in a memory provided in the luminaire control apparatus 122-j or in another component of the luminaire 120-j. The luminaire ID assigned to the luminaire 120-k may be applied, for example, to identify the respective luminaire 120-j in communication between elements of the lighting system 100, as described in the following.

Figure 3 illustrates a block diagram of some (logical) components of a sensor unit 110-k according to an example. The sensor unit 110-k may comprise a sensor portion 111-k that comprises one or more sensors and a sensor control apparatus 112-k that comprises a communication portion 113-k for wireless communication with other elements of the lighting system 100 and a control portion 114-k for controlling at least one aspect of operation of the sensor unit 110-k in accordance with sensor information obtained from the sensor portion 111-k and/or in accordance with information received via the communication portion 113-k.

The one or more sensors of the sensor portion 111-k may be communicatively coupled, e.g. via respective electrical wires, to the sensor control apparatus 112-k in order to provide respective sensor signals thereto. The one or more sensors of the sensor portion 111-k may comprise e.g. one or more of the following:
- an occupancy sensor for monitoring occupancy at the location of the sensor unit 110-k, e.g. a passive infrared (PIR) sensor, a microwave radar, a lidar, a thermal camera, etc.;
- a light sensor for measuring ambient light level at the location of the sensor unit 110-k, e.g. photodetector such as photodiode;
- a temperature sensor for measuring ambient temperature at the location of the sensor unit 110-k;
- a humidity sensor for measuring air humidity at the location of the sensor unit 110-k;
- a carbon dioxide (CO₂) sensor for measuring a CO₂ level at the location of the sensor unit 110-k;
- a volatile organic compound (VOC) sensor for measuring respective levels of one or more VOCs at the location of the sensor unit 110-k.

Each of the one or more sensors may serve to provide respective sensor data that may be applied by the control portion 114-k for controlling the respective light output of the luminaires 120-j assigned to the sensor unit 110-k.

The control portion 114-k may control at least some aspects of the respective light output of the luminaires 120-j associated with the sensor unit 110-k, where this controlling may rely at least partially on the sensor data obtained from the sensor portion 111-k and/or from information received from the luminaires 120-j of the lighting system 100. In an example, the control portion 114-k may comprise a processor and a memory, where the memory is arranged to store computer program code that, when executed by the processor, causes the sensor control apparatus 112-k to carry out operations that implement the lighting control according to the present disclosure. More detailed examples of using the processor and the memory for implementing the control portion 114-k are described later in this text with references to Figure 6.

In the course of its operation, the control portion 114-k may capture or derive sensor indications based on respective sensor signals received from the sensor portion 111-k and arrange the captured or derived sensor indications into a respective time series of sensor indications. Examples in this regard include deriving occupancy state indications (i.e. respective indications of one of occupancy or non-occupancy) based on the occupancy sensor signal received from the occupancy sensor of the sensor portion 111-k and/or derive light level indications based on the light sensor signal received from the light sensor of the sensor portion 111-k. Consequently, the respective light outputs of the luminaires 120-j associated with the sensor unit 110-k may be carried out based at least in part on one or more time series of sensor indications, e.g. on a time series of occupancy state indications and/or on a time series of light level indications, derived at the control portion 114-k.

In an example, the control portion 114-k in the sensor unit 110-k may control respective light outputs of the associated luminaires 120-j based on the one or more time series of sensor indications derived therein. In this regard, the lighting control may be carried out in accordance with a predefined lighting control logic that defines one or more lighting control rules, where each lighting control rule may define a respective pair of a triggering condition and a lighting control action to be carried out in response to an occurrence of the triggering condition. As an example, a lighting control rule may define a triggering condition that directly or indirectly pertains to one or more time series of sensor indications derived at the control portion 114-k. The control portion 114-k may implement the lighting control actions by transmitting, via the communication portion 113-k, respective lighting control commands to the associated luminaires 120-j, whereas each of the associated luminaires 120-j may implement the lighting control commands via operation of the control portion 124-j therein.

In another example, the lighting control logic may be implemented in the respective control portions 124-j of the associated luminaires 120-j (instead of the control portion 114-k in the sensor unit 110-k implementing the lighting control logic). In such a scenario the control portion 114-k in the sensor unit 110-k may transmit, via the communication portion 113-k, the one or more time series of sensor indications (e.g. the occupancy indications and/or light level indications) derived therein as the lighting control information to the associated luminaires 120-j to facilitate implementing the lighting control rules of the lighting control logic therein.

As a few examples of lighting control actions arising from operation of the lighting control logic for controlling the light output of a certain luminaire 120-j, the lighting control logic may define one or more of the following lighting control rules:
- a first lighting control rule that defines switching on the light output of the respective luminaire 120-j to a target light intensity or otherwise adjusting the light output of the respective luminaire 120-j from a lower light intensity to the target light intensity as a response to the time series of occupancy indications indicating a change of the occupancy state from non-occupancy to occupancy;
- a second lighting control rule that defines adjusting the light output of the respective luminaire 120-j to a stand-by light intensity (e.g. switching off the light output of the respective luminaire 120-j) in accordance with a predefined dimming curve as a response to the time series of occupancy indications indicating a change of occupancy state from occupancy to non-occupancy;
- a third lighting control rule that defines increasing the light intensity applied for the light output of the respective luminaire 120-j as a response to the time series of light level indications indicating a light level that is below a target light level by more than a predefined margin;
- a fourth lighting control rule that defines decreasing the light intensity applied for the light output of the respective luminaire 120-j as a response to the time series of light level indications indicating a light level that is above the target light level by more than the predefined margin.

Moreover, to account for scenarios where the occupancy state remains unchanged, the lighting control logic may comprise respective lighting control rules for keeping on the light output of the respective luminaire 120-j in response to the time series of occupancy indications indicating continued occupancy and/or for keeping off the light output of the respective luminaire 120-j in response to the time series of occupancy indications indicating continued non-occupancy.

The sensor unit 110-k or an element thereof may have a device identifier (ID), e.g. an address, a serial number, a name, etc. assigned to the sensor unit 110-k or to an element thereof. The device ID assigned to the sensor unit 110-k may be referred to as a sensor ID of the sensor unit 110-k. The sensor ID may be stored, for example, in a memory provided in the sensor control apparatus 112-k or in another component of the sensor unit 110-k. The sensor ID assigned to the sensor unit 110-k may be applied, for example, to identify the respective sensor unit 110-k in communication between elements of the lighting system 100, as described in the following.

As described in the foregoing, the respective communication portions 113-k and 123-j in the sensor unit 110-k and the luminaire 120-j may enable wireless communication with other elements of the lighting system 100. In this regard, the communication portion 113-k, 123-j may comprise a respective communication apparatus, e.g. a wireless transceiver, that is capable of communicating with respective communication apparatuses provided in other elements of the lighting system 100 using one or more predefined wireless communication techniques or protocols. The wireless communication may be carried out via using a suitable short-range wireless communication technique known in the art that enables communication over ranges from a few meters up to a few hundred meters. Examples of suitable short-range wireless communication techniques include Bluetooth, Bluetooth Low-Energy (BLE), ZigBee, WLAN/Wi-Fi according to an IEEE 802.11 family of standards, etc. The choice of the wireless communication technique and network topology applied for a specific implementation of the lighting system 100 may depend e.g. on the required communication range and/or requirements with respect to energy-efficiency of the communication apparatuses.

As described in the foregoing, the lighting control within the lighting system 100 may at least partially rely on the plurality of luminaire groups, where the respective light outputs from those ones of the plurality of luminaires 120 that are assigned to a certain luminaire group may be at least in part controlled via operation of a sensor unit 110-k assigned for the respective luminaire group via the respective sensor unit 110-k providing the associated luminaires 120-j with lighting control information and/or lighting control commands. Moreover, the sensor unit 110-k may further transmit, to the associated luminaires 120-j and/or to other ones of the plurality of sensor units 110, control information and/or commands that may not directly pertain to controlling the respective light outputs of the associated luminaires 120-j but that may pertain to determining the plurality of luminaire groups within the lighting system 100.

Luminaire grouping procedure according to the present disclosure may comprise an initial luminaire grouping procedure for determining an initial luminaire group for the sensor unit 110-k, possibly followed by an arbitration procedure that may involve modification of the initial luminaire group determined for the sensor unit 110-k in view of respective luminaire groups determined at other ones of the plurality of sensor units 110. In this regard, determination of one or more luminaire groups for the lighting system 100 may involve each of the plurality of sensor units 110 carrying out the initial luminaire grouping procedure to determine the respective initial luminaire group therein, possibly followed by the arbitration procedure that may result in one or more sensor units 110-k modifying the initial luminaire group determined therein based on the knowledge of respective luminaire groups determined at other ones of the plurality of sensor units 110 to ensure assigning the plurality of luminaires 120 into the plurality of luminaire groups in accordance with applicable luminaire grouping rules or criteria. In general, the luminaire group determination procedure may apply one or more grouping criteria that are defined via a luminaire grouping template that is considered applicable for determining the luminaire group for the sensor unit 110-k. In this regard, the one or more grouping criteria defined via the luminaire group comprise at least one distance criterion and the one or more grouping criteria may further comprise at least one group size criterion and/or at least one group composition criterion.

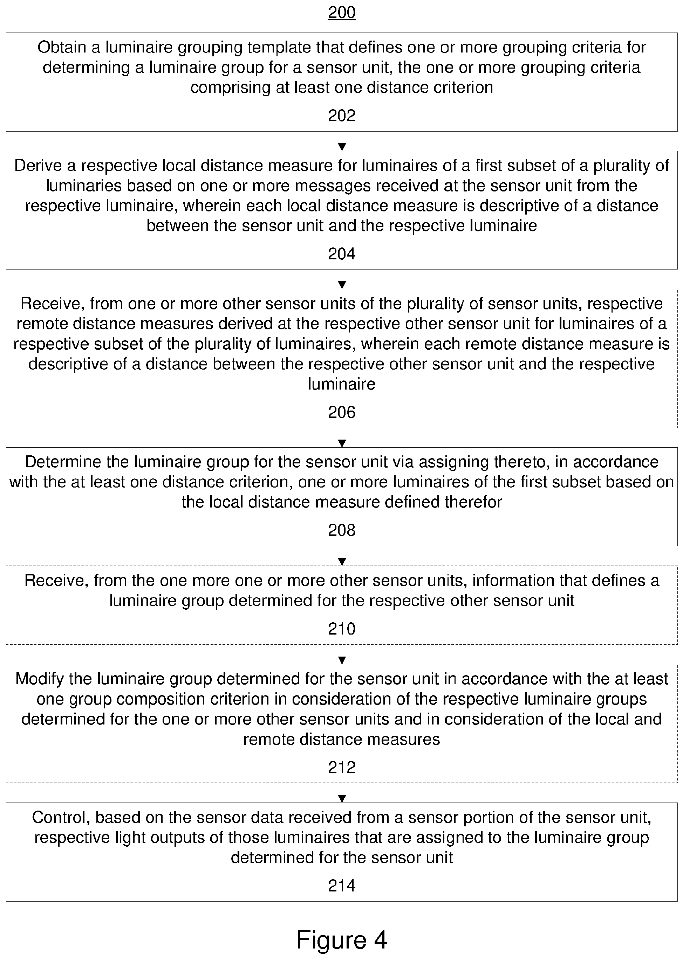

In an example, the luminaire group determination procedure that includes both the initial luminaire grouping procedure and the arbitration procedure may be carried out via implementing a method 200 illustrated in Figure 4, where the method 200 may comprise the following steps:
- obtaining a luminaire grouping template that defines one or more grouping criteria for determining the luminaire group for the sensor unit 110-k, wherein the one or more grouping criteria comprise at least one distance criterion and at least one group composition criterion (block 202);
- deriving a respective local distance measure for luminaires 120-j of a first subset of the plurality of luminaires 120 based on one or more messages received from the respective luminaire 120-j at the communication portion 113-k, wherein each local distance measure is descriptive of a distance between the sensor unit 110-k and the respective luminaire 120-j (block 204);
- receiving, from one or more other sensor units of the plurality of sensor units 110 via the communication portion 113-k, respective remote distance measures derived at the respective other sensor unit for luminaires 120-j of a respective subset of the plurality of luminaires 120, wherein each remote distance measure is descriptive of a distance between the respective other sensor unit and the respective luminaire 120-j (block 206);
- determining the luminaire group for the sensor unit 110-k via assigning thereto, in accordance with at least one or more distance criterion, one or more luminaires 120-j of the first subset based on the local distance measure defined therefor (block 208);
- receiving, from the one or more other sensor units via the communication portion 113-k, information that defines a luminaire group determined for the respective other sensor unit (block 210);
- modifying the luminaire group determined for the sensor unit 110-k in accordance with the at least one group composition criterion in consideration of the respective luminaire groups determined for the one or more other sensor units and in consideration of the local and remote distance measures (block 212); and
- controlling, based on the sensor data received from the sensor portion 111-k, respective light outputs of those luminaires 120-j that are assigned to the luminaire group determined for the sensor unit 110-k (block 214).

The respective operations described with references to the method steps represented by blocks 202 to 214 may be varied or complemented in a number of ways, the method 200 may be complemented with one or more additional steps, the order of carrying out at least some of the method steps may be different from that depicted in Figure 4 and/or some of the steps may be omitted without departing from the scope of the luminaire group determination technique described in the present disclosure. As an example in this regard, the aspect of determining the (initial) luminaire group for the sensor unit 110-k (cf. block 208) may be carried out before receiving the respective remote distance measures from the one or more other sensor units (cf. block 206). As another example in this regard, in some examples the method 200 as described above includes both the initial luminaire grouping procedure (blocks 202, 204 and 208) and the arbitration procedure (blocks 206, 210 and 212), whereas in some examples only the initial luminaire grouping procedure may be carried out while omitting the arbitration procedure. In such a variation of the method 200, the applied luminaire grouping template (cf. block 202) defines the at least one distance criteria while it may or may not define the one or more group composition criteria. In the following, however, the method 200 is described with references to both the initial grouping procedure and the arbitration procedure.

Moreover, even though predominantly described herein as a procedure carried out in a certain sensor unit 110-k, the luminaire group determination procedure according to the method 200 may be carried out in each of the plurality of sensor units 110 with the aim of assigning each of the plurality of luminaires 120 for the respective luminaire group of at least one of the plurality of sensor units 110. Yet further, in the following examples it is assumed that the method 200 is carried out via operation of the control portion 114-k of the sensor unit 110-k, whereas in other examples the method 200 may be carried by another entity of the sensor unit 110-k or by another element included in or coupled to the lighting system 100.

The luminaire grouping template applied for determining the luminaire group for the sensor unit 110-k via operation of the method 200 as well as the one or more grouping criteria defined via the applied luminaire grouping template may be predefined ones in that they may be set or selected before carrying out the method 200, e.g. as part of manufacturing the sensor unit 110-k before providing the sensor unit 110-k for installation as part of the lighting system 100 or upon installing, configuring or reconfiguring the lighting system 100 and/or the sensor unit 110-k. As an example, the applied luminaire grouping template may define the one or more grouping criteria via indicating one or more grouping criteria to be applied for the sensor unit 110-k from a plurality of predefined grouping criteria available for the sensor unit 110-k. The plurality of predefined grouping criteria may be made available for the sensor unit 110-k via storing them in a memory provided in the sensor control apparatus 112-k or in another component of the sensor unit 110-k. In this regard, the plurality of predefined grouping criteria available for the sensor unit 110-k may comprise
- one or more predefined distance criteria,
- one or more predefined group size criteria,
- one or more predefined group composition criteria,
whereas the applied luminaire group template may indicate selection of at least one of the one or more predefined distance criteria and it may further indicate respective selection of at least one of the one or more predefined group size criteria and/or at least one of the one or more predefined group composition criteria. Respective non-limiting examples of applicable distance criteria, group size criteria and group composition criteria are described in the following.

As an example in this regard, information that defines the luminaire grouping template to be applied for determining the luminaire group for the sensor unit 110-k may be stored in the memory in the sensor control apparatus 112-k, whereas the aspect of obtaining the luminaire grouping template, and hence obtaining the one or more grouping criteria, to be applied for the sensor unit 110-k (cf. block 202) may comprise reading the information that defines the applicable luminaire grouping template from the memory. Herein, the luminaire grouping template pre-selected for the sensor unit 110-k may be one of a plurality of different luminaire grouping templates, where each luminaire grouping template defines a respective selection from the one or more predefined grouping criteria that is different from respective selections defined by other ones of the plurality of luminaire grouping templates. The plurality of luminaire grouping templates may define respective different sets of one or more grouping criteria that are considered suitable for spaces of different types and/or purposes, such as office rooms, open office spaces, meeting rooms, corridors, garages, warehouses, etc. Moreover, there may be different sets of grouping criteria defined for certain space types in different sizes, such as small and large office rooms, small and large meeting rooms, small and large open office spaces, etc. In this regard, the respective luminaire grouping template defined for a certain type of space may comprise any combination of the grouping criteria considered suitable for the respective space.

As another example of obtaining the luminaire grouping template to be applied for the sensor unit 110-k (cf. block 202), the memory in the sensor control apparatus 112-k may store information that defines the plurality of luminaire grouping templates described above or a predefined subset thereof, whereas the control potion 114-k may receive an indication of the luminaire grouping template to be selected for application for the sensor unit 110-k. In this regard, the selection among the luminaire grouping templates available for the sensor unit 110-k in the memory therein may be received, for example, via a user interface (UI) of the sensor unit 110-k or in a control signal or command received via the communication portion 113-k.

Each of the plurality of luminaire grouping templates may be assigned a template ID that may be applied to identify a template type of the respective luminaire grouping template e.g. in communication between the plurality of sensor units 110, where the template ID may comprise a name, a number or an identification of other kind that uniquely identifies the template type of the respective luminaire grouping template in the framework of the lighting system 100. In this regard, the template type indicated for the sensor unit grouping template via the template ID assigned thereto may represent the type of space for which the respective sensor unit grouping template is intended for, e.g. one of the following: a small office room, a large office room, a small open office space, a large open office space, a small meeting room, a large meeting room, a corridor, a garage, a warehouse, etc.

Moreover, each of the plurality of luminaire grouping templates may be assigned a respective template priority that indicates its priority in relation to other ones of the luminaire grouping templates. The template priority may be applied to rank the respective luminaire grouping templates considered suitable for different types of spaces into an order of importance e.g. in a scenario where a certain luminaire 120-j needs to be assigned to the luminaire group of the sensor unit 110-k or to a luminaire group of another one of the plurality of sensor units 110. Additionally or alternatively, each of the plurality of sensor units 110 may be assigned a respective sensor unit priority that indicates its priority in relation to other ones of the plurality of sensor units 110, thereby enabling ranking of the plurality of sensor units 110 into an order of importance when assigning a certain luminaire 120-j to the luminaire group of the sensor unit 110-k or to a luminaire group of another one of the plurality of sensor units 110.

Yet further, each of the one or more grouping criteria defined via a luminaire grouping template may be assigned a respective criterion priority that indicates its priority in relation to other ones of the one or more grouping criteria defined via the respective luminaire grouping template. The criterion priority may be applied to rank the respective grouping criteria defined via the respective luminaire grouping template into an order of importance, thereby allowing prioritization of the grouping criteria defined via the respective luminaire grouping template with respect to each other e.g. in a scenario where the applied grouping criteria impose conflicting requirements that cannot be simultaneously met. In such a scenario, the respective criterion priorities assigned to the one or more grouping criteria defined in the applied luminaire grouping template may be applied in assignment of luminaires of the first subset to the luminaire group being determined for the sensor unit 110-k such that in a scenario where two grouping criteria defined in the applied luminaire groping template cannot be simultaneously met, the grouping criterion that has a higher criterion priority is complied with while the grouping criterion that has a lower criterion priority is ignored or complied with to extent possible.

Referring now back to operations that pertain to block 204, in various examples, the aspect of deriving the respective local distance measures for the first subset of the plurality of luminaires 120 may rely on one or more ID messages received from the respective luminaires 120-j at the communication portion 113-k of the sensor unit 110-k. Herein, the first subset may comprise all luminaires 120-j from which the sensor unit 110-k has received at least a predefined number of ID messages (e.g. at least one ID message) within an observation period. Hence, in some examples the first subset may include those ones of the plurality of luminaires 120 that are within a communication range from the sensor unit 110-k. The ID message transmitted from the luminaire 120-j includes at least the luminaire ID of the respective luminaire 120-j and it may further include one of the following: the template ID of the luminaire grouping template applied in the sensor unit 110-k, the template priority assigned to the luminaire grouping template applied in the sensor unit 110-k, the sensor unit priority assigned to the sensor unit 110-k.

In one example, the ID message is transmitted from the communication portion 123-j of the respective luminaire 120-j at a predefined reference transmission (TX) power, which is known by the respective control portions 124-j, 114-k at the luminaire 120-j and at the sensor unit 110-k. In another example, the ID message is transmitted at a TX power chosen by the control portion 124-j or by the communication portion 123-j of the luminaire 120-j and an indication of the applied TX power is included in the ID message to make also the control portion 114-k in the sensor unit 110-k aware of the applied TX power, thereby enabling normalization of the received signal power in view of the reference TX power.

In one example, the control portion 124-j in the luminaire 120-j may operate the communication portion 123-j to transmit ID messages according to a predefined schedule, e.g. at predefined time intervals. In another example, alternatively or additionally, the control portion 124-j in the luminaire 120-j may operate the communication portion 123-j to transmit a predefined number of ID messages according to a predefined schedule in response to receiving an ID request via the communication portion 123-j. In this regard, the control portion 114-k in the sensor unit 110-k may operate the communication portion 113-k to transmit (e.g. broadcast) an ID request or a series of ID requests upon initiating the group determination procedure.

The local distance measure for a certain luminaire 120-j may be derived based on respective distance values derived for one or more individual ID messages received at the sensor unit 110-k from the respective luminaire 120-j, e.g. as a statistical measure such as a minimum, an average, a median or a maximum of the distance values under consideration. Moreover, in addition to or instead of deriving the local distance measure for a certain luminaire 120-j, a local distance stability measure for the respective luminaire 120-j may be derived based on the respective distance values derived for the one or more individual ID messages received at the sensor unit 110-k from the respective luminaire 120-j, where the distance stability measure may be derived as (another) statistical measure of the distance values under consideration. Non-limiting examples of an applicable distance value comprise a received signal strength indication (RSSI) value derived based on a received ID message, a hop count value derived based on the received ID message, and a time of flight value derived based on the received ID message. For clarity and brevity of description, the examples provided in the following are predominantly described with references to a RSSI-based distance estimation, whereas application of other distance estimation approaches (such as ones based on hop count or time of flight) is briefly described separately thereafter.

The RSSI measure for a luminaire 120-j may be computed based on respective RSSI values derived for one or more ID messages received from the luminaire 120-j at the communication portion of the sensor unit 110-k. In case the TX power applied at the luminaire 120-j for transmitting the respective ID message is different from the reference TX power (and hence indicted in the ID message), derivation of the RSSI value may further involve scaling or normalization of the RSSI value in accordance with the difference between the applied TX power and the reference TX power before using the respective RSSI value for computation the RSSI measure. The RSSI measure for the luminaire 120-j may be computed e.g. as an average or as a median of the respective RSSI values derived for the one or more ID messages under consideration. Hence, a RSSI measure having a high(er) value indicates a short(er) distance between the sensor unit 110-k and the respective luminaire while a RSSI measure having a low(er) value indicates a long(er) distance between the sensor unit 110-k and the respective luminaire 120-j, the RSSI measure thereby serving as an indication of the distance between these two elements of the lighting system 100 e.g. in scenarios where the sensor unit 110-k receives the ID messages directly from the respective luminaire 120-j (i.e. without the ID messages being relayed by intermediate nodes of the lighting network).

In examples where the RSSI measure is applied as the distance measure, the local distance stability measure, if applied, may comprise a RSSI stability measure, which may be computed based on the respective RSSI values derived for the one or more ID messages under consideration. As an example in this regard, the RSSI stability measure for the luminaire 120-j may be defined based a difference between a minimum RSSI value and an average of the RSSI values derived for the luminaire 120-j, e.g. as a ratio of the minimum RSSI value to the average of the RSSI values. As examples in this regard, the minimum RSSI value may be defined as the smallest one of the RSSI values under consideration or as an average of the lowest decile of the RSSI values under consideration. In this regard, a RSSI stability measure having a relatively high value may be considered as an indication of a transmission path whose characteristics remain substantially constant over time due to relatively short and/or unobstructed path between the sensor unit 110-k and the respective luminaire 120-j, whereas a RSSI stability measure having a relatively low value may be considered as an indication of a transmission path whose characteristics vary over time due to relatively long and/or temporally obstructed path between the sensor unit 110-k and the respective luminaire 120-j, where the variation may at least in part be caused due to a door between the sensor unit 110-k and the respective luminaire 120-j being opened and closed.

Derivation of the respective local distance measures and/or the respective local distance stability measures for the luminaires 120-j of the first subset may be followed by transmitting, e.g. broadcasting, information regarding the luminaires 120-j of the first subset. As an example in this regard, the information regarding a certain luminaire 120-j of the first subset may comprise, for each luminaire of the first subset, the luminaire ID of the respective luminaire 120-j, the local distance measure (e.g. the local RSSI measure) derived for the respective luminaire 120-j and, optionally, the local distance stability measure (e.g. the local RSSI stability measure) derived for the respective luminaire 120-j. This information may be conveyed from the sensor unit 110-k in one or more distance information messages transmitted via the communication portion 113-k, wherein the transmitted messages may further include the sensor ID of the sensor unit 110-k to identify the sensor unit 110-k as the origin of the conveyed information.

The other ones of the plurality of sensor units 110 of the lighting system 100 may likewise derive therein respective local distance measures and/or respective local distance stability measures (e.g. the respective local RSSI measures and/or the respective local RSSI stability measures) for luminaires 120-j of the respective subset of the plurality of luminaires 120 and transmit, e.g. broadcast, this information in one or more distance information messages of the type described above for reception by the other elements of the lighting system 100, whereas in viewpoint of the sensor unit 110-k the local distance measures and/or the local distance stability measures derived at another sensor unit constitute corresponding remote distance measures and/or remote distance stability measures. Hence, the control portion 114-k of the sensor unit 110-k may receive, from the other sensor units of the lighting system 100, via the communication portion 113-k, the respective remote distance measures (e.g. the respective remote RSSI measures) and/or the respective remote distance stability measures (e.g. the respective remote RSSI stability measures) derived at the respective other sensor unit for the luminaires 120-j of the respective subset of the plurality of luminaires 120 (cf. block 206).

As the information pertaining to the remote distance measures and/or the remote distance stability measures derived at a certain other sensor unit is received at the sensor unit 110-k in one or more distance information messages of the type described above, the received information also includes the sensor ID of the other sensor unit having transmitted the respective sensor information message(s) and the respective luminaire IDs of the luminaires of the respective subset of the plurality luminaires 120 considered in the respective other sensor unit, e.g. the respective luminaire IDs of those ones of the plurality of luminaires 120 that are within a communication range from the respective other sensor unit. Consequently, with reception of the respective distance information messages from the one or more other sensor units at the sensor unit 110-k the control portion 114-k also acquires (further) information of the respective sensor IDs of the plurality of sensor units 110 and the respective luminaire IDs of the plurality of luminaires 120.

Referring now to the at least one distance criterion that is applicable e.g. for the luminaire group determination in accordance with operations pertaining to block 208, the one or more distance criteria that are available for the sensor unit 110-k may comprise, for example, one or more of the following:
- a first distance criterion that defines a predefined distance measure threshold (e.g. a RSSI threshold) that indicates a maximum allowable distance between the sensor unit **110-k** and a given luminaire 120-j (e.g. a minimum allowable value for the local RSSI measure);
- a second distance criterion that defines a predefined distance difference measure threshold (e.g. a RSSI difference threshold) that indicates a maximum allowable value for a distance difference measure (e.g. the RSSI difference measure), where the distance difference measure for a given luminaire 120-j of the first subset is derived as a difference between the highest local distance measure (e.g. the highest local RSSI measure) derived for any luminaire of the first subset and the local distance measure (e.g. the local RSSI measure) derived for the respective luminaire 120-j;
- a third distance criterion that defines a predefined distance measure stability threshold (e.g. a RSSI stability threshold) that indicates a minimum allowable value for the distance stability measure (e.g. the local RSSI stability value), wherein the distance stability measure is derived based on a difference between a minimum distance value (e.g. a minimum RSSI value) derived for a given luminaire 120-j and an average of the distance values (an average of the RSSI values) derived for the respective luminaire 120-j.

Hence, the at least one distance criterion defined in the applied luminaire grouping template for application in determination of the luminaire group for the sensor unit 110-k (cf. block 208) may comprise, for example, one or more of the first, second and third distance criteria described above.

In the second distance criterion described above, in an example, the distance difference measure for a given luminaire 120-j may comprise an absolute difference between the highest local distance measure derived for any luminaire of the first subset and the local distance measure derived for the respective luminaire 120-j, whereas in another example it may comprise a ratio of the highest local distance measure derived for any luminaire of the first subset to the local distance measure derived for the respective luminaire 120-j, where the applied distance measure stability threshold may be set or selected in accordance of the type of difference (absolute or ratio) applied for determining the distance difference measure.

In an example, the one or more predefined distance criteria that are available for the sensor unit 110-k may include two or more instances of the first, second and/or third distance criteria, even though these exemplifying criteria are described in the foregoing in singular. Consequently, the at least one distance criterion defined in the applied luminaire grouping template may define usage of one of the two or more instance of the respective one of the first, second and/or third distance criteria. In this regard, two instances of the respective one of the first, second and/or third distance criteria apply different values for the respective threshold applied therein. Considering the second distance criterion as an example, a first instance of the second distance threshold may apply a first predefined distance difference measure threshold (e.g. a first RSSI difference threshold) and a second instance of the second distance threshold may apply a second predefined distance difference measure threshold (e.g. a second RSSI difference threshold), where the first predefined distance difference measure is different from the second predefined distance difference measure.

In another example, the one or more predefined distance criteria included in the plurality of grouping criteria may include a single instance of the first, second and/or third distance criteria, where the respective threshold value may be defined as a respective parameter of the luminaire grouping template defining application of one or more of these criteria. Examples in this regard include the following:
- a luminaire grouping template that defines usage of the first distance criterion may also define a value for the predefined distance measure threshold (e.g. the RSSI threshold) via a respective parameter of the luminaire grouping template,
- a luminaire grouping template that defines usage of the second distance criterion may also define a value for the predefined distance difference measure threshold (e.g. the RSSI difference threshold) via a respective parameter of the luminaire grouping template,
- a luminaire grouping template that defines usage of the third distance criterion may also define a value for the predefined distance measure stability threshold (e.g. the RSSI stability threshold) via a respective parameter of the luminaire grouping template.

Usage of respective parameter(s) of the luminaire grouping template enables setting or adjusting the value(s) applied for the respective one(s) of the predefined distance measure threshold, the predefined distance difference measure threshold and/or the predefined distance measure stability threshold in accordance with characteristics of the operating environment of the sensor unit 110-k. The applied parameter value(s) may be set, for example, via the UI of the sensor unit 110-k or via one or more control signals or commands received at the sensor unit 110-k via the communication portion 113-k.

Still referring to operations that pertain to block 208, determination of the luminaire group for the sensor unit 110-k in accordance with the at least one distance criterion may comprise selecting one or more luminaires 120-j of the first subset that meet the at least one distance criterion and it may result in assigning those luminaires 120-j of the first subset that are relatively close to the sensor unit 110-k and/or relatively close to each other to form the luminaire group for the sensor unit 110-k and hence constitute luminaires 120-j that are suitable for being controlled based on sensor data captured at the sensor portion 111-k of the sensor unit 110-k.

Along the lines described in the foregoing, the one or more grouping criteria defined in the applied luminaire grouping template may further comprise at least one group size criterion, whereas the assignment of one or more luminaires 120-j of the first subset of the plurality of luminaires 120 to the luminaire group for the sensor unit 110-k may be carried out further in accordance with the at least one group size criterion, e.g. such that the at least one group size criterion is met. Further along the lines described in the foregoing, the applied luminaire grouping template may define the at least one group size criteria as a selection from the one or more predefined group size criteria that may comprise, for example, one or more of the following:
- a first group size criterion that defines a minimum allowable number of luminaires to be assigned to the luminaire group of the sensor unit 110-k,
- a second group size criterion that defines a maximum number of luminaires to be assigned to the luminaire group of the sensor unit 110-k.

In some scenarios, application of the at least one distance criterion and the at least one group size criterion defined in the applied luminaire grouping template may impose conflicting requirements e.g. such that all those luminaires 120-j of the first subset that meet the at least one distance criterion cannot be accommodated in the luminaire group being determined for the sensor unit 110-k such that the at least one group size criterion is also met or such that there is an insufficient number of luminaires 120-j in the first subset that meet the at least one distance criterion in order to also meet the at least one group size criterion. As an example of accounting for such scenarios, the respective criterion priorities possibly assigned to the one or more grouping criteria defined in the applied luminaire grouping template may be applied in assignment of luminaires of the first subset to the luminaire group of the sensor unit 110-k in a manner described in the foregoing. In a particular example in this regard, in a scenario where application of the at least one group size criterion results in selecting less than all those luminaires 120-j of the first subset that meet the at least one distance criterion, those luminaires 120-j for which the distance criterion having the highest criterion priority among the at least one distance criterion indicates the most favorable distance characteristic may be selected (or, conversely, those luminaires 120-j for which the distance criterion having the highest criterion priority among the at least one distance criterion indicates the least favorable distance characteristic may be left unselected).

In an example, the one or more predefined group composition criteria that are available for the sensor unit 110-k may comprise a first group composition criterion that defines application of substantially even sized luminaire groups across the plurality of sensor units 110 of the lighting system 100 and hence across the luminaire groups determined therefor. Hence, the at least one group composition criteria defined in the applied luminaire grouping template may comprise the first group composition criterion and, consequently, the first group composition criterion may be applied as part of determining the luminaire group for the sensor unit 110-k (cf. block 208). If the first group composition criterion is included in the at least one group composition criterion, any group size criteria may be omitted from the applied luminaire grouping template or the first group composition criterion may be assigned a higher criterion priority than the any of the one or more group size criteria defined in the applied luminaire grouping template.

As an example, application of the first group composition criterion may comprise the following:
- determine the number of sensor units in the lighting system 100 and the number of luminaires 120-j in the lighting system 100,
- compute a target size N for the luminaire group based on the determined number of luminaires and the determined number of sensor units, and
- assign N luminaires of the first subset to the luminaire group being determined for the sensor unit 110-k.

In the above-described procedure for applying the first group composition criterion, the respective numbers of the luminaires and sensor units in the lighting system 100 may be derived based on the (number of different) luminaire IDs and further based on the (number of different) sensor IDs received at the sensor unit 110-k e.g. in the ID messages received from luminaires 120-j of the lighting system 100 and/or in the distance information messages received from the other sensor units of the lighting system 100. Moreover, the target size N may be computed e.g. by dividing the determined number of luminaires by the determined number of sensor units, possibly rounded to the nearest integer if necessary.

The above example describes application of the first group composition criterion as a procedure that may be applied as part of determining the initial luminaire group for the sensor unit 110-k via operations that pertain to block 208. In this regard, it is worth noting that possible subsequent modification of the initial luminaire group via application of another group composition criterion (cf. block 212) may result in assigning one or more further luminaires 120-j to and/or unassigning one or more luminaires 120-j from the initial luminaire group, provided that the other group composition criterion is assigned a criterion priority higher than that assigned to the first group composition criteria. In another example, the first group composition criterion may be applied as part of modifying the initial luminaire group as part of operations that pertain to block 212.

Determination of the (initial) luminaire group for the sensor unit 110-k may be followed by transmitting, e.g. broadcasting, information that defines the determined luminaire group in order to make the other elements of the lighting system 100 aware of the luminaire group initially determined for the sensor unit 110-k. As an example in this regard, the transmitted information may comprise the respective luminaire IDs of the luminaires 120-j assigned to the determined luminaire group and the transmitted information may further comprise the luminaire group ID assigned to the determined luminaire group. This information may be conveyed from the sensor unit 110-k in one or more luminaire group information messages transmitted via the communication portion 113-k, wherein the transmitted luminaire group information messages may further include the sensor ID of the sensor unit 110-k to identify the sensor unit 110-k as the origin of the conveyed information.

The other sensor units of the lighting system 100 may likewise determine their respective (initial) luminaire groups and transmit, e.g. broadcast, this information in one or more luminaire group information messages of the type described above for reception by the other elements of the lighting system 100. Consequently, the aspect of receiving the information that defines the respective luminaire groups determined for the one or more other sensor units (cf. block 210) may comprise receiving the respective one or more luminaire group information messages from the one or more other sensor units via the communication portion 113-k and extracting the luminaire group IDs (if included) and the respective luminaire IDs of the luminaires 120-j assigned to the respective luminaire group from the received luminaire group information messages.

Referring now to operations pertaining to block 212, the aspect of modifying the (initial) luminaire group determined for the sensor unit 110-k via operations that pertain to block 208 may comprise assigning one or more further luminaires 120-j to the luminaire group initially determined for the sensor unit 110-k and/or removing (e.g. unassigning) one or more luminaires from the luminaire group initially determined for the sensor unit 110-k via application of the at least one group composition criterion. In this regard, assigning one or more further luminaires 120-j to the luminaire group and/or removing (e.g. unassigning) one or more luminaires 120-j from the luminaire group may be carried out in consideration of the respective luminaires 120-j assigned to the respective luminaire groups determined for the one or more other sensor units in view of the local and remote distance measures available at the control portion 114-k.

In this regard, in some examples the first group composition criterion that defines application of substantially equal sized luminaire groups across the sensor units of the lighting system 100 may have been already applied as part of determination of the initial luminaire group for the sensor unit 110-k (cf. block 208) and hence the first group composition criteria, if included in the one or more grouping criteria defined in the applied luminaire grouping template, may not be re-applied as part of luminaire group modification (cf. block 212). Conversely, in another example, if the first group composition criterion is included in the one or more grouping criteria defined in the applied luminaire grouping template but it is not applied as part of determination of the initial luminaire group for the sensor unit 110-k, the first group composition criterion may be applied (e.g. as described in the foregoing) as part of modifying the initial luminaire group.

In an example, the one or more predefined group composition criteria that are available for the sensor unit 110-k may comprise a second group composition criterion that defines assigning a luminaire that is not assigned to any of the luminaire groups to a luminaire group of a sensor unit that is closest to the respective luminaire and, consequently, the at least one group composition criterion defined in the applied luminaire grouping template may comprise the second group composition criterion. As an example, application of the second group composition criterion may comprise the following:
- detect that a given luminaire 120-j of the first subset is not assigned to the luminaire group determined for the sensor unit 110-k or to any of the respective luminaire groups determined for the one or more other sensor units, and
- assign the given luminaire 120-j to the luminaire group determined for the sensor unit 110-k in response to the local distance measure derived for the given luminaire 120-j indicating a distance that is smaller than that indicated by any of the remote distance measures derived for the given luminaire 120-j.

In an example, the one or more predefined group composition criteria that are available for the sensor unit 110-k may comprise a third group composition criterion that defines a maximum allowable number of sensor units for controlling a single luminaire of the lighting system 100 and, consequently, the at least one group composition criterion defined in the applied luminaire grouping template may comprise the third group composition criterion. As an example, application of the second group composition criterion may comprise the following:
- detect that a given luminaire 120-j is assigned to the luminaire group determined for the sensor unit 110-k and that the number of groups M to which the given luminaire 120-j is assigned is larger than the maximum allowable number of sensor units for controlling a single luminaire, and
- remove the given luminaire 120-j from the luminaire group determined for the sensor unit 110-k in response to detecting that the local distance measure derived for the given luminaire 120-j does not indicate a distance that is within the M shortest distances among the distances indicated by the respective local and remote distance measures pertaining to the given luminaire 120-j.

In the above-described procedure for applying the third group composition criterion, the local and remote distances measures that pertain to the given luminaire 120-j include the local distance measure derived for the given luminaire 120-j (that indicates the distance between the sensor unit 110-k and the given luminaire 120-j) and the respective remote distance measures for the given luminaire 120-j received from the one or more other sensor units (that indicate the respective distance between the respective one of the one or more other sensor units and the given luminaire 120-j).

The above example of applying the third group composition criterion, implicitly, assumes a scenario where the sensor unit priorities are not applied or a scenario where the sensor unit 110-k and each of the one or more other sensor units are assigned the same senor unit priority. In another example, application of the third group composition criterion may account for possibly different respective sensor unit priorities assigned to the sensor unit 110-k and the one or more other sensor units. As an example in this regard, in the above-described procedure for applying the third group composition criterion the aspect of (possibly) removing the given luminaire 120-j from the luminaire group determined for the sensor unit 110-k may only consider those ones of the one or more other sensor units that have a sensor unit priority that is higher than or equal to the senor unit priority assigned to the sensor unit 110-k. While described above with references to the sensor unit priorities, substantially similar application of the third group composition criterion may be provided via considering respective template priorities assigned to the respective luminaire grouping templates applied by the sensor unit 110-k and the one or more other sensor units under consideration, *mutatis mutandis.*

Modification of the luminaire group for the sensor unit 110-k (cf. block 212) may be followed by transmitting, e.g. broadcasting, information that defines the modified luminaire group in order to make the other elements of the lighting system 100 aware of the luminaire group determined for the sensor unit 110-k. As an example in this regard, the transmitted information may comprise the respective luminaire IDs of the luminaires 120-j assigned to the determined luminaire group and the transmitted information may further comprise the luminaire group ID assigned to the determined luminaire group. This information may be conveyed from the sensor unit 110-k in one or more luminaire group information messages transmitted via the communication portion 113-k, wherein the transmitted luminaire group information messages may further include the sensor ID of the sensor unit 110-k to identify the sensor unit 110-k as the origin of the conveyed information. The other sensor units of the lighting system 100 may likewise determine their respective (modified) luminaire groups therein and transmit, e.g. broadcast, this information in one or more luminaire group information messages of the type described above for reception by the other elements of the lighting system 100.

Referring now to operations that pertain to block 214, the aspect of the sensor unit 110-k controlling the respective light output of the luminaires 120-j assigned to the luminaire group defined therefor may involve the control portion 114-k in the sensor unit 110-k transmitting the lighting control information (e.g. the sensor indications derived at the control portion 114-k) or the lighting control commands to the associated luminaires 120-j in order to carry out lighting control actions defined in the lighting control logic implemented by the respective control portions 124-j of the associated luminaires 120-j or by the control portion 114-k of the sensor unit 110-k as described in the foregoing.

As an example, the lighting control information or the lighting control commands may be conveyed in one or more lighting control messages transmitted from the sensor unit 110-k via the communication portion 113-k. In an example, the lighting control messages transmitted from the sensor unit 110-m may include the luminaire IDs of the associated luminaires 120-j to address the respective lighting control information or command(s) to the luminaires assigned to the luminaire group determined for the sensor unit 110-k and the lighting control messages may further include the sensor ID of the sensor unit 110-k to identify the sensor unit 110-k as the origin of the lighting control information or command(s). In another example, the lighting control messages transmitted from the sensor unit 110-k may not include the luminaire IDs of the associated luminaires 120-j while they may include the sensor ID of the sensor unit 110-k: since the luminaires 120-j have the knowledge of the sensor ID of the sensor unit 110-k assigned for controlling their light output via the luminaire group information messages received earlier from the sensor unit 110-k, the associated luminaires 120-j may be responsive to the lighting control information or command(s) included in the lighting control messages originating from the sensor unit 110-k without explicit identification of the associated luminaires 120-j in these messages.

Along the lines described in the foregoing, the luminaire group determination procedure may be carried out, for example, upon installing, configuring or reconfiguring the lighting system 100 and/or the sensor unit 110-k. Moreover, the luminaire grouping determination procedure may be repeated according to a predefined schedule (e.g. at predefined time intervals) and/or upon request or command addressed to the plurality of the sensor units 110 to account for any changes in the composition of lighting system 100 (e.g. removal of luminaires or sensor units therefrom and/or introduction of additional luminaires or sensor units thereto) or for any refurbishing or restructuring of the space(s) the lighting system 100 serves to illuminate. In a further example, the luminaire grouping template may define one or more rules for repeating the luminaire group determination procedure. Non-limiting examples in this regard include the following:
- The luminaire grouping template may define a schedule for repeating the luminaire grouping procedure, where the schedule may involve repeating the luminaire grouping procedure at a time intervals defined in the luminaire grouping template or at specific time instants defined in the luminaire grouping template.
- The luminaire grouping template may define that the luminaire grouping procedure is to be repeated in response to detecting presence of at least a (first) predefined number of luminaires 120-j that were not detected upon carrying out the most recent previous luminaire grouping procedure and/or in response to detecting absence of a (second) predefined number of luminaires 120-j that were detected upon carrying out the most recent previous luminaire grouping procedure.

As discussed above, the examples concerning various aspects of luminaire grouping via operation of the method 200 are described in the foregoing with references to using a RSSI-based distance estimation, whereas in other examples distance estimation of other kind may be applied. As a non-limiting example in this regard, the local distance measure derived in the control portion 114-k of the sensor unit 110-k for a certain luminaire 120-j may comprise a hop count measure computed based on respective hop counts derived for one or more ID messages received from the respective luminaire 120-j at the communication portion 113-k of the sensor unit 110-k. In this regard, the hop count for a given ID message may be included in a header part of the ID message received at the communication portion 113-k, whereas the hop count measure for the respective luminaire 120-j may be computed as a statistical measure of the respective hop counts observed for the one or more ID messages under consideration, e.g. as a minimum, as an average or as a median thereof. Hence, a low hop count measure indicates a short(er) distance between the sensor unit 110-k and the respective luminaire 120-j while a high hop count measure indicates a long(er) distance between the sensor unit 110-k and the respective luminaire 120-j, and, consequently, the hop count measure may serve as indication of the distance between the luminaire 120-j and the sensor unit 110-k e.g. in scenarios where the ID messages are relayed from the luminaire 120-j to the sensor unit 110-k via one or more intermediate nodes (e.g. in a mesh network).

Hence, in the hop-count-based distance estimation the distance values may comprise respective hop counts obtained from the ID messages received at the communication portion 113-k, the distance measure may comprise the hop count measure, and the distance stability measure may comprise a hop count stability measure, whereas the application of the one or more distance criteria and any computation involved therein may be carried out based on the hop count values, hop count measures and/or hop count stability measures (instead of or in addition to e.g. the RSSI values, RSSI measures and/or RSSI stability measures), *mutatis mutandis.*

As another example of distance measures other than RSSI, the local distance measure derived in the control portion 114-k of the sensor unit 110-k for a certain luminaire 120-j may comprise a time of flight (ToF) measure computed based on respective ToF values derived for one or more ID messages received from the respective luminaire 120-j at the communication portion 113-k of the sensor unit 110-k. In this regard, the ToF value for a given ID message may be computed based on a difference between the reception time and the transmission time of the respective ID message. In this regard, the ID message (e.g. a header part thereof) may include a timestamp indicating the transmission time of the respective ID message and, assuming time synchronization between the respective luminaire 120-j and the sensor unit 110-k, the ToF value for a given ID message may be computed as the difference between the reception and transmission times derived for the respective ID message. The ToF measure may be computed as a statistical measure of the respective ToF values computed for the one or more ID messages under consideration, e.g. as a minimum, as an average, as a median, or as a maximum thereof. Hence, a low ToF measure indicates a short(er) distance between the sensor unit 110-k and the respective luminaire 120-j while a high ToF measure indicates a long(er) distance between the sensor unit 110-k and the respective luminaire 120-j, and, consequently, the ToF measure may serve as indication of the distance between the luminaire 120-j and the sensor unit 110-k e.g. in scenarios where the sensor unit 110-k receives the ID messages directly from the respective luminaire 120-j (i.e. without the ID messages being relayed by intermediate nodes of the lighting network).

Hence, in the ToF-based distance estimation the distance values may comprise respective ToF values derived based on the ID messages received at the communication portion 113-k, the distance measure may comprise the ToF measure, and the distance stability measure may comprise a ToF stability measure, whereas the application of the one or more distance criteria and any computation involved therein may be carried out based on the ToF values, ToF measures and/or ToF stability measures (instead of or in addition to e.g. the RSSI values, RSSI measures and/or RSSI stability measures), *mutatis mutandis.*

Although described above with using the RSSI-based distance estimation as an example, the first, second and/or second distance criteria described in the foregoing may, additionally or alternatively, rely on distance values, distance measures and/or distance stability measures (as applicable) that are derived via usage of the hop-count-based distance estimation and/or the ToF-based distance estimation. In this regard, the one or more predefined distance criteria available for the sensor unit 110-k may comprise two or more instances of the respective one of the first, second and/or third distance criteria that apply different basis for distance estimation and, consequently, the at least one distance criterion defined in the applied luminaire grouping template may define usage of one or more of such instances of the respective one of the first, second and/or third distance criteria. Considering the first distance criterion as an example, a first instance of the first distance criterion may apply a RSSI-based distance estimation, whereas a second instance of the first distance criterion may apply a hop-count-based distance criterion.

Referring back to the RSSI-based distance estimation described in the foregoing, in scenarios where the transmission path from a transmitting entity to a receiving entity (e.g. from a luminaire 120-j to the sensor unit 110-k) is unobstructed, the RSSI measure may be directly descriptive of a physical distance between the transmitting and receiving entities due to attenuation of the radio signal as a function of distance. On the other hand, structural elements such as walls and windows within the illuminated space may result in additional attenuation of the radio signal, possibly leading the scenarios where the RSSI measure is not a direct indication of the physical distance between the transmitting and receiving entities. However, since such obstacles typically also serve to prevent light from passing therethrough and/or delimit the space into different portions that are preferably illuminated independently of each other, such additional attenuation of the radio signal and the resulting RSSI measure that suggest a distance longer than the actual physical distance between the transmitting and receiving entities is actually advantageous in terms of the sensor unit 110-k using the RSSI measure in identifying luminaires 120-j that are applicable for inclusion in the luminaire group being determined therefor. Non-limiting examples of radio signal attenuating effect resulting from certain structural elements are provided in the following:
- An exterior wall or an exterior window of a building typically results in a relatively large attenuation of the radio signal;
- A load-bearing (interior) wall of a building typically results in a relatively large attenuation of the radio signal, corresponding to the attenuation caused by an exterior wall;
- A relatively thin (non-load-bearing) interior wall that delimits an interior space into two portions results in a moderate attenuation of the radio signal;
- A glass wall that delimits an interior space into two portions results in a relatively small attenuation of the radio signal;
- A door between two portions of a space results in a time-varying attenuation of the radio signal.

As also described in the following, there may be a plurality of different luminaire grouping templates that are configured suitable for respective different types of spaces, whereas one of the plurality of luminaire grouping templates may be selected as the luminaire grouping template applied for the sensor unit 110-k. This aspect is further illustrated via a non-limiting example of Figure 5 that shows a floorplan of an illuminated space including spaces of different types:
- Open areas (e.g. small or large open office spaces), for which a relatively large luminaire group with a relatively relaxed distance requirement (to allow for covering a relatively large physical area) may be preferred;
- Large rooms (e.g. large office rooms or meeting rooms), for which a medium sized luminaire group with a relatively stringent requirement to distance and distance variation (to ensure covering somewhat limited physical area) may be preferred;
- Small rooms (e.g. small office rooms), for which a relatively small luminaire group with a relatively stringent requirement to distance and distance variation (to ensure covering a relatively small physical area) may be preferred
- A corridor, for which a relatively large luminaire group with a relatively stringent distance requirement (to allow for covering a physical area without obstructing structures between the sensor units) may be preferred.

The luminaire group determination procedure described in the foregoing via a number of examples provides automated assignment of the luminaires 120-j into the plurality of luminaire groups applicable for controlling the light output of lighting system 100. Configuring the lighting system via carrying out the luminaire group determination via operating the elements of the lighting system 100 in its actual operating environment ensures basing the luminaire group determination on measurement data obtained in actual operating conditions of the lighting system 100. Hence, the disclosed approach does not only enable avoiding tedious manual configuration of the plurality of sensor units 110 to apply respective manually designed luminaire groups but also provides for grouping respective subsets of the plurality of luminaires 120 to operate under control of a respective one of the plurality of sensor units 110 in manner that facilitates determination of sensor unit groups in a manner that enables energy-efficient operation while still ensuring user comfort due to sufficient lighting in locations of the illuminated space where occupant are detected.

While the luminaire group determination procedure is described in the foregoing as a standalone procedure, the automated luminaire grouping via operation of the method 200 may be, alternatively, complemented by manual determination of respective luminaire groups for one or more of the plurality of sensor units 110 and manual configuration of the respective sensor units 110-k accordingly.

As an example in this regard, a given sensor unit 110-k may be configured with a predetermined luminaire group with predefined one or more luminaires 120-j of the lighting system 100 assigned thereto prior to carrying out the luminaire grouping procedure in the (other) sensor units of the lighting system 100. In an example, such manually determined luminaire group may be provided e.g. by providing the sensor unit 110-k arranged to apply the predetermined luminaire group with a higher sensor unit priority than any of the other sensor units that determine their respective luminaire groups according to the method 200, thereby ensuring that these luminaires 120-j remain assigned to the predetermined luminaire group despite operation of the luminaire group determination procedure being operated in the sensor units of the lighting system 100. In another example, assuming the luminaires 120-j assigned to the predetermined group are to be exclusively controlled by the respective sensor unit 110-k, the transmission of the ID messages from the associated luminaires 120-j may be suppressed at least for the duration of the luminaire grouping procedure carried out in the (other) sensor units of the lighting system 100, thereby ensuring that none of the other sensor units is able to assign these luminaires 120-j to the luminaire group being determined therein via operation of the luminaire grouping procedure.

As another example of applying manual determination of respective luminaire groups for one or more sensor units of the lighting system 100 in addition to the luminaire grouping procedure described in the foregoing involves post-assignment of one or more luminaires 120-j from one luminaire group to another, which may be applicable e.g. in a scenario where two or more luminaires 120-j are located relatively close to each other and a grouping different from that resulting from operation of the luminaire grouping procedure according to the method 200 is desired.

Figure 6 illustrates a block diagram of some components of an apparatus 300 that may be employed to implement at least some of the operations described with references to the sensor control apparatus 112-k or with references to the luminaire control apparatus 122-j. The apparatus 300 comprises a processor 310 and a memory 320. The memory 320 may store data and computer program code 325. The apparatus 300 may further comprise communication means 330 for wired or wireless communication with other apparatuses, where the communication means 330 may comprise respective one of the communication portion 113-k or the communication portion 123-j. The apparatus 300 may further comprise user I/O (input/output) components 340 that may be arranged, together with the processor 310 and a portion of the computer program code 325, to provide a user interface for receiving input from a user and/or providing output to the user. In particular, the user I/O components may include user input means, such as one or more keys or buttons, a keyboard, a touchscreen or a touchpad, etc. The user I/O components may include output means, such as a display or a touchscreen. The components of the apparatus 300 are communicatively coupled to each other via a bus 350 that enables transfer of data and control information between the components.

The memory 320 and a portion of the computer program code 325 stored therein may be further arranged, with the processor 310, to cause the apparatus 300 to perform at least some aspects of operation of the respective one of the sensor control apparatus 112-k or the luminaire control apparatus 122-j. The processor 310 is configured to read from and write to the memory 320. Although the processor 310 is depicted as a respective single component, it may be implemented as respective one or more separate processing components. Similarly, although the memory 320 is depicted as a respective single component, it may be implemented as respective one or more separate components, some or all of which may be integrated/removable and/or may provide permanent / semi-permanent/ dynamic/cached storage.

The computer program code 325 may comprise computer-executable instructions that implement at least some aspects of operation of the respective one of the sensor control apparatus 112-k or the luminaire control apparatus 122-j when loaded into the processor 310. As an example, the computer program code 325 may include a computer program consisting of one or more sequences of one or more instructions. The processor 310 is able to load and execute the computer program by reading the one or more sequences of one or more instructions included therein from the memory 320. The one or more sequences of one or more instructions may be configured to, when executed by the processor 310, cause the apparatus 300 to perform at least some aspects of operation of the lighting system controller **110.** Hence, the apparatus 300 may comprise at least one processor 310 and at least one memory 320 including the computer program code 325 for one or more programs, the at least one memory 320 and the computer program code 325 configured to, with the at least one processor 310, cause the apparatus 300 to perform at least some aspects of operation of the respective one of the sensor control apparatus 112-k or the luminaire control apparatus 122-j.

The computer program code 325 may be provided e.g. a computer program product comprising at least one computer-readable non-transitory medium having the computer program code 325 stored thereon, which computer program code 325, when executed by the processor 310 causes the apparatus 300 to perform at least some aspects of operation of the respective one of the sensor control apparatus 112-k or the luminaire control apparatus 122-j. The computer-readable non-transitory medium may comprise a memory device or a record medium that tangibly embodies the computer program. As another example, the computer program may be provided as a signal configured to reliably transfer the computer program.

Reference(s) to a processor herein should not be understood to encompass only programmable processors, but also dedicated circuits such as field-programmable gate arrays (FPGA), application specific circuits (ASIC), signal processors, etc.

## Claims

1. A sensor unit (110-k) for a lighting system (100) that comprises a plurality of luminaires (120-j) for illuminating respective locations of a space, the sensor unit (110-k) comprising:
a sensor portion (111-k) comprising one or more sensors for observing respective environmental characteristics at a location of the space;
a communication portion (113-k) for wireless communication with other elements of the lighting system (100), where said other elements comprise the plurality of luminaires (120-j); and
a control portion (114-k) arranged to:
obtain a luminaire grouping template that defines one or more grouping criteria for determining a luminaire group for the sensor unit (110-k), wherein the luminaire grouping template defines said one or more grouping criteria via indicating selection of the one or more grouping criteria from a plurality of predefined grouping criteria available for the sensor unit (110-k) and wherein said one or more grouping criteria comprise at least one distance criterion and at least one group size criterion;
derive a respective local distance measure for luminaires (120-j) of a first subset of the plurality of luminaires (120) based on one or more messages received therefrom at the communication portion (113-k), wherein each local distance measure is descriptive of a distance between the sensor unit (110-k) and the respective luminaire (120-j);
determine the luminaire group for the sensor unit (110-k) via assigning thereto, in accordance with at least one distance criterion and further in accordance with the at least one group size criterion, one or more luminaires (120-j) of the first subset based on the local distance measure derived therefor; and
control, based on sensor data received from the sensor portion (111-k), respective light outputs of the luminaires (120-j) assigned to said luminaire group for the sensor unit (110-k).

2. A sensor unit (110-k) according to claim 1, wherein the at least one distance criterion comprise at least one of the following:
a first distance criterion that defines a predefined distance measure threshold that indicates a maximum allowable distance between the sensor unit (110-k) and the respective luminaire (120-j),
a second distance criterion that defines a predefined distance difference measure threshold that indicates a maximum allowable value for a distance difference measure, wherein the distance difference measure for a luminaire (120-j) of the first subset is derived as a difference between the highest local distance measure derived for any luminaire of the first subset and the local distance measure derived for the respective luminaire (120-j),
a third distance criterion that defines a predefined distance stability threshold that indicates a minimum allowable value for a distance stability measure, wherein the distance stability measure for a luminaire (120-j) of the first subset is computed based on respective distance values derived based on the one or more messages received from the respective luminaire (120-j) based on a difference between a minimum distance value derived for the respective luminaire (120-j) and an average of the distance values derived for the respective luminaire (120-j).

3. A sensor unit (110-k) according to claim 2, wherein at least one of the following applies:
at least one of the first, second and third distance criteria apply a respective fixed predefined threshold value,
at least one of the first, second and third distance criteria apply a respective threshold value defined via a respective user-definable parameter of the luminaire grouping template.

4. A sensor unit (110-k) according to any of claims 1 to 3, wherein a distance measure that is descriptive of a distance between the sensor unit (110-k) and a luminaire (120-j) of the first subset comprises one of the following:
a received signal strength indictor, RSSI, measure computed based on respective RSSI values derived for one or more messages received at the sensor unit (110-k) from the respective luminaire (120-j),
a hop count measure computed based on respective hop counts observed for one or more messages received at the sensor unit (110-k) from the respective luminaire (120-j),
a time of flight, ToF, measure computed based on respective ToF values derived for one or more messages received at the sensor unit (110-k) from the respective luminaire (120-j).

5. A sensor unit (110-k) according to any of claims 1 to 4, wherein the at least one group size criterion comprise at least one of the following:
a first group size criterion that defines a minimum allowable number of luminaires for the luminaire group,
a second group size criterion that defines a maximum allowable number of luminaires for the luminaire group.

6. A sensor unit (110-k) according to any of claims 1 to 5, wherein each of the one or more grouping criteria defined in the luminaire grouping template have a respective criterion priority assigned thereto and wherein assigning one or more luminaires (120-j) of the first subset to the luminaire group determined for the sensor unit (110-k) comprises, in a scenario where two grouping criteria cannot be simultaneously met, complying with the grouping criterion assigned a higher criterion priority while ignoring the grouping criterion assigned a lower criterion priority.

7. A sensor unit (110-k) according to any of claims 1 to 6, wherein the one or more grouping criteria defined in the luminaire grouping template further comprise at least one group composition criterion and wherein the control portion (114-k) is further arranged to:
receive, from one or more other sensor units via the communication portion (113-k), respective remote distance measures derived at the respective other sensor unit for luminaires (120-j) of a respective subset of the plurality of luminaires (120), wherein each remote distance measure is descriptive of a distance between the respective other sensor unit and the respective luminaire (120-j);
receive, from the one or more other sensor units via the communication portion (113-k), information that defines a luminaire group determined for the respective other sensor unit; and
modify the luminaire group determined for the sensor unit (110-k) in accordance with the at least one group composition criterion in consideration of the respective luminaire groups determined for the one or more other sensor units and in consideration of the local and remote distance measures.

8. A sensor unit (110-k) according to claim 7, wherein the at least one group composition criterion comprises one or more of the following:
a first group composition criterion that defines application of substantially even sized luminaire groups in the sensor unit (110-k) and in the one or more other sensor units,
a second group composition criterion that defines assigning a luminaire (120-j) that is not assigned to any of the luminaire groups to a luminaire group determined for that one of the sensor unit (110-k) and the one or more other sensor units which is closest to the respective luminaire (120-j),
a third group composition criterion that defines a maximum allowable number of sensor units for controlling a single luminaire.

9. A sensor unit (110-k) according to claim 8, wherein the at least one group composition criterion comprises said first group composition criterion and wherein assigning one or more luminaires (120-j) of the first subset to the luminaire group determined for the sensor unit (110-k) comprises:
determining the number of sensor units and the number luminaires (120-j), based on information received from the one or more other sensor units,
computing a target size N for the luminaire group based on the number of luminaires (120-j) and the number of sensor units, and
assigning N luminaires (120-j) of the first subset to the luminaire group determined for the sensor unit (110-k).

10. A sensor unit (110-k) according to claim 8 or 9, wherein the at least one group composition criterion comprises said second group composition criterion and wherein modifying the luminaire group determined for the sensor unit (110-k) in accordance with the second group composition criterion comprises:
detecting that a luminaire (120-j) of the first subset is not assigned to the luminaire group determined for the sensor unit (110-k) or to any of the respective luminaire groups determined for the one or more other sensor units, and
assigning the respective luminaire (120-j) to the luminaire group determined for the sensor unit (110-k) in response to the local distance measure derived therefor indicating a distance that is smaller than that indicated by any of the remote distance measures derived for the respective luminaire (120-j).

11. A sensor unit (110-k) according to any of claims 8 to 10, wherein the at least one group composition criterion comprises said third group composition criterion and wherein modifying the luminaire group determined for the sensor unit (110-k) in accordance with the third group composition criteria comprises:
detecting that a luminaire (120-j) is assigned to the luminaire group determined for the sensor unit (110-k) and that the number of groups M to which the respective luminaire (120-j) is assigned is larger than said maximum allowable number of sensor units for controlling a single luminaire; and
removing the respective luminaire (120-j) from the luminaire group determined for the sensor unit (110-k) in response to detecting that the local distance measure derived for the respective luminaire (120-j) does not indicate a distance that is within the M shortest distances among the distances indicated by the local and remote distance measures pertaining to the respective luminaire (120-j).

12. A sensor unit (110-k) according to claim 11, wherein each of the sensor unit (110-k) and the one or more other sensors units have a respective sensor unit priority assigned thereto and wherein the aspect of removing the respective luminaire (120-j) from the luminaire group determined for the sensor unit (110-k) only considers those ones of the one or more other sensor units that have a sensor unit priority that is higher than or equal to the sensor unit priority assigned to the sensor unit (110-k).

13. A sensor unit (110-k) according to any of claims 1 to 12, wherein the control portion (114-k) is arranged to receive an indication of the luminaire grouping template to be selected from a plurality of different predefined luminaire grouping templates that define respective different sets of one or more grouping criteria that are considered suitable for spaces of different types and/or purposes.

14. A sensor unit (110-k) according to any of claims 1 to 13, wherein controlling respective light outputs of the luminaires (120-j) assigned to said luminaire group for the sensor unit (110-k) comprises transmitting, via the communication portion (113-k), lighting control information or lighting control commands addressed to the luminaires (120-j) assigned to the luminaire group determined for the sensor unit (110-k), wherein the lighting control information or lighting control commands are derived based on the sensor data received from the sensor portion (111-k).

## Patentansprüche

1. Sensoreinheit (110-k) für ein Beleuchtungssystem (100), das mehrere Leuchten (120-j) zum Beleuchten jeweiliger Orte eines Raums umfasst, wobei die Sensoreinheit (110-k) Folgendes umfasst:
einen Sensorteil (111-k), der einen oder mehrere Sensoren zum Beobachten jeweiliger Umgebungscharakteristiken an einem Ort des Raums umfasst;
einen Kommunikationsteil (113-k) zur Drahtloskommunikation mit anderen Elementen des Beleuchtungssystems (100), wobei die anderen Elemente die mehreren Leuchten (120-j) umfassen; und
einen Steuerteil (114-k), der zu Folgendem eingerichtet ist:
Erhalten einer Leuchtengruppierungsvorlage, die ein oder mehrere Gruppierungskriterien zum Bestimmen einer Leuchtengruppe für die Sensoreinheit (110-k) definiert, wobei die Leuchtengruppierungsvorlage das eine oder die mehreren Gruppierungskriterien über Angabe einer Auswahl des einen oder der mehreren Gruppierungskriterien aus mehreren vordefinierten Gruppierungskriterien definiert, die für die Sensoreinheit (110-k) verfügbar sind, und wobei das eine oder die mehreren Gruppierungskriterien wenigstens ein Entfernungskriterium und wenigstens ein Gruppengrößenkriterium umfassen;
Ableiten eines jeweiligen lokalen Entfernungsmaßes für Leuchten (120-j) einer ersten Teilmenge der mehreren Leuchten (120) basierend auf einer oder mehreren Nachrichten, die davon an dem Kommunikationsteil (113-k) empfangen werden, wobei jedes lokale Entfernungsmaß eine Entfernung zwischen der Sensoreinheit (110-k) und der jeweiligen Leuchte (120-j) beschreibt;
Bestimmen der Leuchtengruppe für die Sensoreinheit (110-k) über Zuweisen einer oder mehrerer Leuchten (120-j) der ersten Teilmenge basierend auf dem dafür abgeleiteten lokalen Entfernungsmaß gemäß wenigstens einem Entfernungskriterium und ferner gemäß dem wenigstens einen Gruppengrößenkriterium dazu; und
Steuern, basierend auf Sensordaten, die von dem Sensorteil (111-k) empfangen werden, jeweiliger Lichtausgaben der Leuchten (120-j), die der Leuchtengruppe für die Sensoreinheit (110-k) zugewiesen sind.

2. Sensoreinheit (110-k) nach Anspruch 1, wobei das wenigstens eine Entfernungskriterium wenigstens eines von Folgendem umfasst:
ein erstes Entfernungskriterium, das eine vordefinierte Entfernungsmaßschwelle definiert, die eine maximale zulässige Entfernung zwischen der Sensoreinheit (110-k) und der jeweiligen Leuchte (120-j) angibt,
ein zweites Entfernungskriterium, das eine vordefinierte Entfernungsdifferenzmaßschwelle definiert, die einen maximalen zulässigen Wert für ein Entfernungsdifferenzmaß angibt, wobei das Entfernungsdifferenzmaß für eine Leuchte (120-j) der ersten Teilmenge als eine Differenz zwischen dem höchsten lokalen Entfernungsmaß, das für eine beliebige Leuchte der ersten Teilmenge abgeleitet wird, und dem lokalen Entfernungsmaß, das für die jeweilige Leuchte (120-j) abgeleitet ist, abgeleitet wird,
ein drittes Entfernungskriterium, das eine vordefinierte Entfernungsstabilitätsschwelle definiert, die einen minimalen zulässigen Wert für ein Entfernungsstabilitätsmaß angibt, wobei das Entfernungsstabilitätsmaß für eine Leuchte (120-j) der ersten Teilmenge basierend auf jeweiligen Entfernungswerten berechnet wird, die basierend auf der einen oder den mehreren Nachrichten abgeleitet werden,
die von der jeweiligen Leuchte (120-j) basierend auf einer Differenz zwischen einem minimalen Entfernungswert, der für die jeweilige Leuchte (120-j) abgeleitet wird, und einem Durchschnitt der Entfernungswerte, die für die jeweilige Leuchte (120-j) abgeleitet werden, empfangen werden.

3. Sensoreinheit (110-k) nach Anspruch 2, wobei wenigstens eines von Folgendem zutrifft:
das erste, zweite und/oder dritte Entfernungskriterium wenden einen jeweiligen festen vordefinierten Schwellenwert an,
das erste, zweite und/oder dritte Entfernungskriterium wendet einen jeweiligen Schwellenwert an, der über einen jeweiligen benutzerdefinierbaren Parameter der Leuchtengruppierungsvorlage definiert ist.

4. Sensoreinheit (110-k) nach einem der Ansprüche 1 bis 3, wobei ein Entfernungsmaß, das eine Entfernung zwischen der Sensoreinheit (110-k) und einer Leuchte (120-j) der ersten Teilmenge beschreibt, eines von Folgendem umfasst:
ein Empfangssignalstärkeindikator- bzw. RSSI-Maß, das basierend auf jeweiligen RSSI-Werten berechnet wird, die für eine oder mehrere Nachrichten abgeleitet werden, die an der Sensoreinheit (110-k) von der jeweiligen Leuchte (120-j) empfangen werden,
ein Hop-Zahl-Maß, das basierend auf jeweiligen Hop-Zahlen berechnet wird, die für eine oder mehrere Nachrichten beobachtet werden, die an der Sensoreinheit (110-k) von der jeweiligen Leuchte (120-j) empfangen werden,
ein Laufzeit- bzw. ToF-Maß, das basierend auf jeweiligen ToF-Werten berechnet wird, die für eine oder mehrere Nachrichten abgeleitet werden, die an der Sensoreinheit (110-k) von der jeweiligen Leuchte (120-j) empfangen werden.

5. Sensoreinheit (110-k) nach einem der Ansprüche 1 bis 4, wobei das wenigstens eine Gruppengrößenkriterium wenigstens eines von Folgendem umfasst:
ein erstes Gruppengrößenkriterium, das eine minimale zulässige Anzahl von Leuchten für die Leuchtengruppe definiert,
ein zweites Gruppengrößenkriterium, das eine maximale zulässige Anzahl von Leuchten für die Leuchtengruppe definiert.

6. Sensoreinheit (110-k) nach einem der Ansprüche 1 bis 5, wobei jedem des einen oder der mehreren Gruppierungskriterien, die in der Leuchtengruppierungsvorlage definiert sind, eine jeweilige Kriteriumspriorität zugewiesen ist und wobei das Zuweisen einer oder mehrerer Leuchten (120-j) der ersten Teilmenge zu der Leuchtengruppe, die für die Sensoreinheit (110-k) bestimmt wird, in einem Szenario, in dem zwei Gruppierungskriterien nicht gleichzeitig erfüllt werden können, Befolgen des Gruppierungskriteriums umfasst, dem eine höhere Kriteriumspriorität zugewiesen wurde, während das Gruppierungskriterium, dem eine niedrigere Kriteriumspriorität zugewiesen wurde, ignoriert wird.

7. Sensoreinheit (110-k) nach einem der Ansprüche 1 bis 6, wobei das eine oder die mehreren Gruppierungskriterien, die in der Leuchtengruppierungsvorlage definiert sind, ferner wenigstens ein Gruppenzusammensetzungskriterium umfassen und wobei der Steuerteil (114-k) ferner zu Folgendem eingerichtet ist:
Empfangen, von einer oder mehreren anderen Sensoreinheiten über den Kommunikationsteil (113-k), jeweiliger ferner Entfernungsmaße, die an der jeweiligen anderen Sensoreinheit für Leuchten (120-j) einer jeweiligen Teilmenge der mehreren Leuchten (120) abgeleitet werden, wobei jedes ferne Entfernungsmaß eine Entfernung zwischen der jeweiligen anderen Sensoreinheit und der jeweiligen Leuchte (120-j) beschreibt;
Empfangen, von der einen oder den mehreren anderen Sensoreinheiten über den Kommunikationsteil (113-k), von Informationen, die eine Leuchtengruppe definieren, die für die jeweilige andere Sensoreinheit bestimmt wird; und
Modifizieren der für die Sensoreinheit (110-k) bestimmten Leuchtengruppe gemäß dem wenigstens einen Gruppenzusammensetzungskriterium unter Berücksichtigung der jeweiligen für die eine oder die mehreren anderen Sensoreinheiten bestimmten Leuchtengruppen und unter Berücksichtigung der lokalen und fernen Entfernungsmaße.

8. Sensoreinheit (110-k) nach Anspruch 7, wobei das wenigstens eine Gruppenzusammensetzungskriterium eines oder mehrere von Folgendem umfasst:
ein erstes Gruppenzusammensetzungskriterium, das eine Anwendung von gleichmäßig dimensionierten Leuchtengruppen in der Sensoreinheit (110-k) und in der einen oder den mehreren anderen Sensoreinheiten definiert,
ein zweites Gruppenzusammensetzungskriterium, das das Zuweisen einer Leuchte (120-j), die keiner der Leuchtengruppen zugewiesen ist, zu einer Leuchtengruppe definiert, die für diejenige der Sensoreinheit (110-k) und der einen oder der mehreren anderen Sensoreinheiten bestimmt wird, die der jeweiligen Leuchte (120-j) am nächsten ist,
ein drittes Gruppenzusammensetzungskriterium, das eine maximal zulässige Anzahl von Sensoreinheiten zum Steuern einer einzelnen Leuchte definiert.

9. Sensoreinheit (110-k) nach Anspruch 8, wobei das wenigstens eine Gruppenzusammensetzungskriterium das erste Gruppenzusammensetzungskriterium umfasst und wobei das Zuweisen einer oder mehrerer Leuchten (120-j) der ersten Teilmenge zu der für die Sensoreinheit (110-k) bestimmten Leuchtengruppe Folgendes umfasst:
Bestimmen der Anzahl von Sensoreinheiten und der Anzahl von Leuchten (120-j) basierend auf Informationen, die von der einen oder den mehreren anderen Sensoreinheiten empfangen werden,
Berechnen einer Zielgröße N für die Leuchtengruppe basierend auf der Anzahl von Leuchten (120-j) und der Anzahl von Sensoreinheiten, und
Zuweisen von N Leuchten (120-j) der ersten Teilmenge zu der für die Sensoreinheit (110-k) bestimmten Leuchtengruppe.

10. Sensoreinheit (110-k) nach Anspruch 8 oder 9, wobei das wenigstens eine Gruppenzusammensetzungskriterium das zweite Gruppenzusammensetzungskriterium umfasst und wobei das Modifizieren der für die Sensoreinheit (110-k) bestimmten Leuchtengruppe gemäß dem zweiten Gruppenzusammensetzungskriterium Folgendes umfasst:
Detektieren, dass eine Leuchte (120-j) der ersten Teilmenge nicht der für die Sensoreinheit (110-k) bestimmten Leuchtengruppe oder irgendeiner der für die eine oder die mehreren anderen Sensoreinheiten bestimmten jeweiligen Leuchtengruppen zugewiesen ist, und
Zuweisen der jeweiligen Leuchte (120-j) zu der für die Sensoreinheit (110-k) bestimmten Leuchtengruppe als Reaktion darauf, dass das dafür abgeleitete lokale Entfernungsmaß eine Entfernung angibt, der kleiner ist als jene, die durch irgendeine der für die jeweilige Leuchte (120-j) abgeleiteten fernen Entfernungsmaße angegeben wird.

11. Sensoreinheit (110-k) nach einem der Ansprüche 8 bis 10, wobei das wenigstens eine Gruppenzusammensetzungskriterium das dritte Gruppenzusammensetzungskriterium umfasst und wobei das Modifizieren der für die Sensoreinheit (110-k) bestimmten Leuchtengruppe gemäß den dritten Gruppenzusammensetzungskriterien Folgendes umfasst:
Detektieren, dass eine Leuchte (120-j) der für die Sensoreinheit (110-k) bestimmten Leuchtengruppe zugewiesen ist und dass die Anzahl von Gruppen M, denen die jeweilige Leuchte (120-j) zugewiesen ist, größer als die maximal zulässige Anzahl von Sensoreinheiten zum Steuern einer einzelnen Leuchte ist; und
Entfernen der jeweiligen Leuchte (120-j) aus der für die Sensoreinheit (110-k) bestimmten Leuchtengruppe als Reaktion auf das Detektieren, dass das für die jeweilige Leuchte (120-j) abgeleitete lokale Entfernungsmaß keine Entfernung angibt, die innerhalb der M kürzesten Entfernungen unter den Entfernungen liegt, die durch das lokale und das ferne Entfernungsmaß angegeben werden, die sich auf die jeweilige Leuchte (120-j) beziehen.

12. Sensoreinheit (110-k) nach Anspruch 11, wobei jeder der Sensoreinheit (110-k) und der einen oder mehreren anderen Sensoreinheiten eine jeweilige Sensoreinheitspriorität zugewiesen ist und wobei der Aspekt des Entfernens der jeweiligen Leuchte (120-j) aus der für die Sensoreinheit (110-k) bestimmten Leuchtengruppe nur diejenigen der einen oder der mehreren anderen Sensoreinheiten berücksichtigt, die eine Sensoreinheitspriorität aufweisen, die höher als oder gleich der Sensoreinheitspriorität ist, die der Sensoreinheit (110-k) zugewiesen ist.

13. Sensoreinheit (110-k) nach einem der Ansprüche 1 bis 12, wobei der Steuerteil (114-k) dazu eingerichtet ist, eine Indikation der Leuchtengruppierungsvorlage zu empfangen, die aus mehreren verschiedenen vordefinierten Leuchtengruppierungsvorlagen auszuwählen ist, die jeweilige unterschiedliche Sätze eines oder mehrerer Gruppierungskriterien definieren, die als geeignet für Räume unterschiedlicher Typen und/oder Zwecke angesehen werden.

14. Sensoreinheit (110-k) nach einem der Ansprüche 1 bis 13, wobei das Steuern jeweiliger Lichtausgaben der Leuchten (120-j), die der Leuchtengruppe für die Sensoreinheit (110-k) zugewiesen sind, Übertragen, über den Kommunikationsteil (113-k), von Beleuchtungssteuerinformationen oder Beleuchtungssteuerbefehlen umfasst, die an die Leuchten (120-j) adressiert sind, die der Leuchtengruppe zugewiesen sind, die für die Sensoreinheit (110-k) bestimmt wurde, wobei die Beleuchtungssteuerinformationen oder Beleuchtungssteuerbefehle basierend auf den Sensordaten, die von dem Sensorteil (111-k) empfangen werden, abgeleitet werden.

## Revendications

1. Unité de capteurs (110-k) pour un système d'éclairage (100) qui comprend une pluralité de luminaires (120-j) pour éclairer des endroits respectifs d'un espace, l'unité de capteurs (110-k) comprenant :
une partie capteurs (111-k) comprenant un ou plusieurs capteurs pour observer des caractéristiques environnementales respectives à un endroit de l'espace ;
une partie de communication (113-k) pour une communication sans fil avec d'autres éléments du système d'éclairage (100), lesdits autres éléments comprenant la pluralité de luminaires (120-j) ; et
une partie de commande (114-k) agencée pour :
obtenir un modèle de groupement de luminaires qui définit un ou plusieurs critères de groupement pour déterminer un groupe de luminaires pour l'unité de capteurs (110-k), le modèle de groupement de luminaires définissant lesdits un ou plusieurs critères de groupement en indiquant la sélection des un ou plusieurs critères de groupement parmi une pluralité de critères de groupement prédéfinis disponibles pour l'unité de capteurs (110-k), et lesdits un ou plusieurs critères de groupement comprenant au moins un critère de distance et au moins un critère de taille de groupe ;
dériver une mesure de distance locale respective pour des luminaires (120-j) d'un premier sous-ensemble de la pluralité de luminaires (120) sur la base d'un ou de plusieurs messages reçus en provenance de ceux-ci au niveau de la partie de communication (113-k), chaque mesure de distance locale décrivant une distance entre l'unité de capteurs (110-k) et le luminaire (120-j) respectif ;
déterminer le groupe de luminaires pour l'unité de capteurs (110-k) en lui affectant, conformément à l'au moins un critère de distance et en outre conformément à l'au moins un critère de taille de groupe, un ou plusieurs luminaires (120-j) du premier sous-ensemble sur la base de la mesure de distance locale dérivée pour ceux-ci ; et
commander, sur la base de données de capteurs reçues en provenance de la partie capteurs (111-k), des émissions lumineuses respectives des luminaires (120-j) affectés audit groupe de luminaires pour l'unité de capteurs (110-k).

2. Unité de capteurs (110-k) selon la revendication 1, dans laquelle l'au moins un critère de distance comprend au moins l'un des critères suivants :
un premier critère de distance qui définit un seuil de mesure de distance prédéfini qui indique une distance maximale admissible entre l'unité de capteurs (110-k) et le luminaire (120-j) respectif,
un deuxième critère de distance qui définit un seuil de mesure de différence de distance prédéfini qui indique une valeur maximale admissible pour une mesure de différence de distance, la mesure de différence de distance pour un luminaire (120-j) du premier sous-ensemble étant dérivée sous forme d'une différence entre la mesure de distance locale la plus élevée dérivée pour un luminaire quelconque du premier sous-ensemble et la mesure de distance locale dérivée pour le luminaire (120-j) respectif,
un troisième critère de distance qui définit un seuil de stabilité de distance prédéfini qui indique une valeur minimale admissible pour une mesure de stabilité de distance, la mesure de stabilité de distance pour un luminaire (120-j) du premier sous-ensemble étant calculée sur la base de valeurs de distance respectives dérivées sur la base des un ou plusieurs messages reçus en provenance du luminaire (120-j) respectif sur la base d'une différence entre une valeur de distance minimale dérivée pour le luminaire (120-j) respectif et une moyenne des valeurs de distance dérivées pour le luminaire (120-j) respectif.

3. Unité de capteurs (110-k) selon la revendication 2, dans laquelle au moins l'une des situations suivantes s'applique :
au moins l'un des premier, deuxième et troisième critères de distance applique une valeur de seuil prédéfinie fixe respective,
au moins l'un des premier, deuxième et troisième critères de distance applique une valeur de seuil respective définie via un paramètre respectif définissable par l'utilisateur du modèle de groupement de luminaires.

4. Unité de capteurs (110-k) selon l'une quelconque des revendications 1 à 3, dans laquelle une mesure de distance décrivant une distance entre l'unité de capteurs (110-k) et un luminaire (120-j) du premier sous-ensemble comprend l'une des mesures suivantes :
une mesure d'indicateur d'intensité de signal reçu, RSSI, calculée sur la base de valeurs de RSSI respectives dérivées pour un ou plusieurs messages reçus au niveau de l'unité de capteurs (110-k) en provenance du luminaire (120-j) respectif,
une mesure de nombres de sauts calculée sur la base de nombres de sauts respectifs observés pour un ou plusieurs messages reçus au niveau de l'unité de capteurs (110-k) en provenance du luminaire (120-j) respectif,
une mesure de temps de vol, ToF, calculée sur la base de valeurs de ToF respectives dérivées pour un ou plusieurs messages reçus au niveau de l'unité de capteurs (110-k) en provenance du luminaire (120-j) respectif.

5. Unité de capteurs (110-k) selon l'une quelconque des revendications 1 à 4, dans laquelle l'au moins un critère de taille de groupe comprend au moins l'un des critères suivants :
un premier critère de taille de groupe qui définit un nombre minimal admissible de luminaires pour le groupe de luminaires,
un deuxième critère de taille de groupe qui définit un nombre maximal admissible de luminaires pour le groupe de luminaires.

6. Unité de capteurs (110-k) selon l'une quelconque des revendications 1 à 5, dans laquelle chacun des un ou plusieurs critères de groupement définis dans le modèle de groupement de luminaires possède une priorité de critère respective qui lui est affectée et dans laquelle l'affectation d'un ou de plusieurs luminaires (120-j) du premier sous-ensemble au groupe de luminaires déterminé pour l'unité de capteurs (110-k) comprend, dans un scénario où deux critères de groupement ne peuvent pas être simultanément satisfaits, le respect du critère de groupement auquel est affectée la priorité de critère la plus élevée tout en ignorant le critère de groupement auquel est affectée la priorité de critère la plus faible.

7. Unité de capteurs (110-k) selon l'une quelconque des revendications 1 à 6, dans laquelle les un ou plusieurs critères de groupement définis dans le modèle de groupement de luminaires comprennent en outre au moins un critère de composition de groupe et dans laquelle la partie de commande (114-k) est agencée en outre pour :
recevoir, en provenance d'une ou de plusieurs autres unités de capteurs via la partie de communication (113-k), des mesures de distance distantes respectives dérivées au niveau de l'autre unité de capteurs respective pour des luminaires (120-j) d'un sous-ensemble respectif de la pluralité de luminaires (120), chaque mesure de distance distante décrivant une distance entre l'autre unité de capteurs respective et le luminaire (120-j) respectif ;
recevoir, en provenance des une ou plusieurs autres unités de capteurs via la partie de communication (113-k), des informations qui définissent un groupe de luminaires déterminé pour l'autre unité de capteurs respective ; et
modifier le groupe de luminaires déterminé pour l'unité de capteurs (110-k) conformément à l'au moins un critère de composition de groupe compte tenu des groupes de luminaires respectifs déterminés pour les une ou plusieurs autres unités de capteurs et compte tenu des mesures de distance locales et distantes.

8. Unité de capteurs (110-k) selon la revendication 7, dans laquelle l'au moins un critère de composition de groupe comprend au moins l'un des critères suivants :
un premier critère de composition de groupe qui définit l'application de groupes de luminaires de tailles sensiblement égales dans l'unité de capteurs (110-k) et dans les une ou plusieurs autres unités de capteurs,
un deuxième critère de composition de groupe qui définit l'affectation d'un luminaire (120-j) qui n'est affecté à aucun des groupes de luminaires à un groupe de luminaires déterminé pour celle, parmi l'unité de capteurs (110-k) et les une ou plusieurs autres unités de capteurs, qui est la plus proche du luminaire (120-j) respectif,
un troisième critère de composition de groupe qui définit un nombre maximal admissible d'unités de capteurs pour commander un seul luminaire.

9. Unité de capteurs (110-k) selon la revendication 8, dans laquelle l'au moins un critère de composition de groupe comprend ledit premier critère de composition de groupe et dans laquelle l'affectation d'un ou de plusieurs luminaires (120-j) du premier sous-ensemble au groupe de luminaires déterminé pour l'unité de capteurs (110-k) comprend :
la détermination du nombre d'unités de capteurs et du nombre de luminaires (120-j), sur la base des informations reçues en provenance des une ou plusieurs autres unités de capteurs,
le calcul d'une taille cible N pour le groupe de luminaires sur la base du nombre de luminaires (120-j) et du nombre d'unités de capteurs, et
l'affectation de N luminaires (120-j) du premier sous-ensemble au groupe de luminaires déterminé pour l'unité de capteurs (110-k).

10. Unité de capteurs (110-k) selon la revendication 8 ou 9, dans laquelle l'au moins un critère de composition de groupe comprend ledit deuxième critère de composition de groupe et dans laquelle la modification du groupe de luminaires déterminé pour l'unité de capteurs (110-k) conformément au deuxième critère de composition de groupe comprend :
la détection du fait qu'un luminaire (120-j) du premier sous-ensemble n'est pas affecté au groupe de luminaires déterminé pour l'unité de capteurs (110-k) ni à l'un quelconque des groupes de luminaires respectifs déterminés pour les une ou plusieurs autres unités de capteurs, et
l'affectation du luminaire (120-j) respectif au groupe de luminaires déterminé pour l'unité de capteurs (110-k) en réponse au fait que la mesure de distance locale dérivée pour celui-ci indique une distance qui est inférieure à celle indiquée par l'une quelconque des mesures de distance distantes dérivées pour le luminaire (120-j) respectif.

11. Unité de capteurs (110-k) selon l'une quelconque des revendications 8 à 10, dans laquelle l'au moins un critère de composition de groupe comprend ledit troisième critère de composition de groupe et dans laquelle la modification du groupe de luminaires déterminé pour l'unité de capteurs (110-k) conformément au troisième critère de composition de groupe comprend :
la détection du fait qu'un luminaire (120-j) est affecté au groupe de luminaires déterminé pour l'unité de capteurs (110-k) et que le nombre de groupes M auxquels le luminaire (120-j) respectif est affecté est supérieur audit nombre maximal admissible d'unités de capteurs pour commander un seul luminaire ; et
le retrait du luminaire (120-j) respectif du groupe de luminaires déterminé pour l'unité de capteurs (110-k) en réponse à la détection du fait que la mesure de distance locale dérivée pour le luminaire (120-j) respectif n'indique pas une distance qui se trouve parmi les M distances les plus courtes parmi les distances indiquées par les mesures de distance locales et distantes relatives au luminaire (120-j) respectif.

12. Unité de capteurs (110-k) selon la revendication 11, dans laquelle chacune de l'unité de capteurs (110-k) et des une ou plusieurs autres unités de capteurs possède une priorité d'unité de capteurs respective qui lui est affectée et dans laquelle l'opération de retrait du luminaire (120-j) respectif du groupe de luminaires déterminé pour l'unité de capteurs (110-k) tient uniquement compte de celles des une ou plusieurs autres unités de capteurs qui possèdent une priorité d'unité de capteurs au moins aussi élevée que la priorité d'unité de capteurs affectée à l'unité de capteurs (110-k).

13. Unité de capteurs (110-k) selon l'une quelconque des revendications 1 à 12, dans laquelle la partie de commande (114-k) est agencée pour recevoir une indication du modèle de groupement de luminaires devant être sélectionné parmi une pluralité de modèles de groupement de luminaires prédéfinis différents qui définissent des ensembles respectifs différents d'un ou de plusieurs critères de groupement qui sont considérés comme adaptés pour des espaces de types différents et/ou de finalités différentes.

14. Unité de capteurs (110-k) selon l'une quelconque des revendications 1 à 13, dans laquelle la commande d'émissions lumineuses respectives des luminaires (120-j) affectés audit groupe de luminaires pour l'unité de capteurs (110-k) comprend la transmission, via la partie de communication (113-k), d'informations de commande d'éclairage ou d'instructions de commande d'éclairage adressées aux luminaires (120-j) affectés au groupe de luminaires déterminé pour l'unité de capteurs (110-k), les informations de commande d'éclairage ou les instructions de commande d'éclairage étant dérivées sur la base des données de capteurs reçues en provenance de la partie capteurs (111-k).
